(19) **Europäisches Patentamt / European Patent Office / Office européen des brevets**

(11) **EP 2 924 091 B1**

(12) **EUROPEAN PATENT SPECIFICATION**

(45) Date of publication and mention
of the grant of the patent:
**08.03.2017 Bulletin 2017/10**

(21) Application number: **13856474.5**

(22) Date of filing: **20.11.2013**

(51) Int Cl.:
*C09J 133/04* (2006.01)   *B32B 27/00* (2006.01)
*C09J 7/02* (2006.01)   *C09J 11/06* (2006.01)
*C09J 107/02* (2006.01)   *C09J 109/00* (2006.01)
*C09J 109/08* (2006.01)   *C09J 111/02* (2006.01)

(86) International application number:
**PCT/JP2013/081273**

(87) International publication number:
**WO 2014/080938 (30.05.2014 Gazette 2014/22)**

(54) **WATER-DISPERSED ADHESIVE COMPOSITION, PRESSURE-SENSITIVE ADHESIVE LAYER, PRESSURE-SENSITIVE ADHESIVE SHEET, AND LAMINATE COMPRISING PRESSURE-SENSITIVE ADHESIVE LAYER OR PRESSURE-SENSITIVE ADHESIVE SHEET**

WASSERDISPERGIERTE HAFTSTOFFZUSAMMENSETZUNG, HAFTSCHICHT, KLEBEFOLIE UND LAMINAT MIT EINER KLEBESCHICHT ODER KLEBEFOLIE

COMPOSITION ADHÉSIVE DISPERSÉE DANS L'EAU, COUCHE ADHÉSIVE, FEUILLE ADHÉSIVE ET STRATIFIÉ COMPRENANT LA COUCHE ADHÉSIVE OU LA FEUILLE ADHÉSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2012 JP 2012258015**

(43) Date of publication of application:
**30.09.2015 Bulletin 2015/40**

(73) Proprietor: **Nitto Denko Corporation**
**Ibaraki-shi, Osaka 567-8680 (JP)**

(72) Inventors:
• **NISHIMURA Izumi**
**Ibaraki-shi**
**Osaka 567-8680 (JP)**

• **OKADA Mika**
**Ibaraki-shi**
**Osaka 567-8680 (JP)**

(74) Representative: **Grünecker Patent- und Rechtsanwälte**
**PartG mbB**
**Leopoldstraße 4**
**80802 München (DE)**

(56) References cited:
**JP-A- H0 726 218**   **JP-A- H04 255 779**
**JP-A- H07 157 723**   **JP-A- H11 116 908**
**JP-A- 2007 002 212**   **JP-A- 2007 197 629**
**JP-A- 2011 137 181**   **US-A1- 2010 310 866**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a water-dispersed pressure-sensitive adhesive composition which forms a pressure-sensitive adhesive layer having excellent adhesiveness to an adherend surface to which oily matter is adherent. The invention further relates to a pressure-sensitive adhesive layer formed from the water-dispersed pressure-sensitive adhesive composition and to a pressure-sensitive adhesive sheet comprising the pressure-sensitive adhesive layer. The invention furthermore relates to a laminate in which the pressure-sensitive adhesive layer or the pressure-sensitive adhesive sheet is applied to an adherend surface having oily matter adherent thereto.

Background Art

Since metals such as iron and copper are prone to rust, rust preventive oils are usually applied to the surfaces of these metals for the purpose of preventing oxidation due to contact with air. Meanwhile, since process oil, cutting oil, machine oil, pressing oil, and the like are used in processing metals, industrial metals for use in motor vehicles, domestic electrical appliances, and building materials frequently have surfaces smeared with such oils.

Furthermore, various pressure-sensitive adhesive tapes or pressure-sensitive adhesive sheets are being used in a wide range of industrial fields including motor vehicles, domestic electrical appliances, and building materials in the case where materials are bonded to each other or in the case where protective films, labels, and the like are applied to materials. However, pressure-sensitive adhesive materials including these pressure-sensitive adhesive tapes and pressure-sensitive adhesive sheets cannot exhibit sufficient adhesive force in cases when water, oily matter, dust or contaminant particles, or the like is adherent to the adherend surface. It is therefore necessary to remove beforehand any water, oily matter, dust or contaminant particles, or the like present on the adherend surface.

In cases when industrial metals such as those shown above have been smeared with oily matter, it is usually necessary to conduct a washing/degreasing step for removing the oil, resulting in increases in labor and cost due to the increase in the number of steps. There is hence a desire for a pressure-sensitive adhesive material which, even when applied to a metal surface smeared with oily matter, is capable of adhering thereto without requiring removal of the oily matter.

Known as such pressure-sensitive adhesive materials are, for example, the pressure-sensitive adhesive sheets or pressure-sensitive adhesive tapes described in patent literatures 1 to 3.

Citation List

Patent Literature

Patent Literature 1:     Japanese Patent No. 3615774
Patent Literature 2:     Japanese Patent No. 3968836
Patent Literature 3:     JP-A-2007-197629

Summary of Invention

Technical Problem

The pressure-sensitive adhesive sheets or pressure-sensitive adhesive tapes described in patent literatures 1 to 3 are capable of absorbing the oil present on the adherend surface but are not considered to have sufficiently high adhesion force to the adherend after the oil absorption. There has hence been a possibility that the pressure-sensitive adhesive materials applied to adherend surfaces might undesirably peel off during steps of use.

An object of the invention is to provide: a pressure-sensitive adhesive sheet that has excellent adhesiveness not only to oil-free surfaces of metals (e.g., SUS) to which oily matter is not adherent but also to adherend surfaces to which oily matter is adherent; and a laminate that includes the pressure-sensitive adhesive sheet.

Means for Solving the Problem

The present inventors diligently made investigations in order to overcome the problem. As a result, the inventors have found that a pressure-sensitive adhesive sheet can be made to exhibit excellent adhesiveness even to adherend surfaces to which oily matter is adherent, by configuring the pressure-sensitive adhesive sheet so as to include a pressure-sensitive adhesive layer formed from a water-dispersed pressure-sensitive adhesive composition according to appended claim 1.

Solution to Problem

Namely, the present invention relates to a water-dispersed pressure-sensitive adhesive composition, which comprises:

a (meth)acrylic polymer obtained by polymerizing monomer ingredient(s) including as a main component a (meth)acrylic acid alkyl ester in which the alkyl group has 1-18 carbon atoms, the content of said (meth)acrylic acid alkyl ester being 60% by weight or more of all monomers of the monomer ingredients,
a rubber ingredient which is incompatible with the (meth)acrylic polymer, as determined by observing whether the loss modulus curve or the loss tangent curve obtained by a dynamic viscoelasticity examination has two peaks assigned to the rubber ingredient and to the (meth)acrylic polymer, respectively, and which has a degree of swelling of 130% or higher upon immersion for 2 hours in a mineral-oil-based rust preventive oil having a kinetic viscosity at 40°C of 5 $mm^2$/s, and
a tackifier,

wherein a blending ratio by weight of the (meth)acrylic polymer to the rubber ingredient is from 95/5 to 5/95, and wherein the tackifier contains at least a tackifier having a softening point of 120°C or higher.
It is preferable that the amount of the tackifier incorporated is 15-50 parts by weight per 100 parts by weight of the sum of the (meth)acrylic polymer and the rubber ingredient. Moreover, it is preferable that the tackifier is a rosin-based resin.
Moreover, it is preferable that the rubber ingredient is at least one member selected from the group consisting of natural rubber, polyisoprene rubber, polybutadiene rubber, and styrene/butadiene rubber. Further, it is preferable that the rubber ingredient, when examined for dynamic viscoelasticity at a shear strain with a frequency of 1 Hz, has a loss-tangent peak temperature of -5°C or lower.
Further, it is preferable that the (meth)acrylic polymer is a polymer obtained by copolymerizing monomer ingredients including

(A) 60-99.5% by weight of the (meth)acrylic acid alkyl ester in which the alkyl group has 1-18 carbon atoms,
(B) 0.5-12% by weight of a reactive functional group-containing unsaturated monomer, and
(C) 0-39.5% by weight of an unsaturated monomer which is copolymerizable with said (A) and said (B).

Especially, it is preferable that, in the (meth)acrylic acid alkyl ester (A), a content rate of a (meth)acrylic acid alkyl ester in which the alkyl group has 7-18 carbon atoms is 10% by weight or higher. Moreover, it is preferable that the functional group of the reactive functional group-containing unsaturated monomer (B) is at least one member selected from the group consisting of a carboxyl group and a hydroxyl group.
Further, the present invention relates to a pressure-sensitive adhesive layer formed from the above-mentioned water-dispersed pressure-sensitive adhesive composition, and a pressure-sensitive adhesive sheet which comprises the pressure-sensitive adhesive layer.
Further, the present invention relates to a laminate in which the above-mentioned pressure-sensitive adhesive layer or the above-mentioned pressure-sensitive adhesive sheet is applied to a surface of an adherend having an oily matter adherent to the surface thereof. Especially, it relates to a laminate, wherein the adherend having an oily matter adherent to the surface thereof is a metallic steel plate.

Advantageous Effects of Invention

Since the water-dispersed pressure-sensitive adhesive composition of the invention includes a (meth)acrylic polymer, a rubber ingredient which is incompatible with the (meth)acrylic polymer and has a degree of swelling of 130% or higher in a mineral-oil-based rust preventive oil having a specific kinetic viscosity, and a tackifier, the pressure-sensitive adhesive sheet comprising a pressure-sensitive adhesive layer formed therefrom can not only have adhesiveness to oil-free surfaces of metals (e.g., SUS) to which oily matter is not adherent but also exhibit high adhesiveness to adherend surfaces to which oily matter is adherent. Consequently, the pressure-sensitive adhesive sheet can be applied to an adherend smeared with oily matter, either after the oily matter is lightly wiped off or directly without wiping off the oily matter.

Brief Description of Drawings

[Fig. 1] Fig. 1 is a graph showing the results of ascertainment of compatibility between the (meth)acrylic polymer and rubber ingredient used in Example 10.
[Fig. 2] Fig. 2 is a view which shows a TEM image of the pressure-sensitive adhesive sheet obtained in Example 10.
[Fig. 3] Fig. 3 (a) to Fig. 3 (d) are cross-sectional views which schematically show the rough configurations of pressure-sensitive adhesive sheets according to embodiments.
[Fig. 4] Fig. 4 (a) to Fig. 4 (d) are cross-sectional views which schematically show the rough configurations of laminates according to embodiments.

Description of Embodiments

The present invention is explained below in detail.
In this description, the expression "A-B" used for indicating a range of a value means that the value is A or greater but not greater than B. The values of various properties mentioned in this description mean values measured by the methods described in the Examples which will be given later, unless otherwise indicated. Furthermore, the "(meth)acrylic" in "(meth)acrylic polymer" in this description means "acrylic and/or methacrylic". Moreover, the term "water-dispersed" in this description means a state in which at least some of the components have been dispersed in water. For example, "water-dispersed pressure-sensitive adhesive composition" means a composition which includes a pressure-sensitive adhesive composition and water and in which some of the pressure-sensitive adhesive composition is in the state of having been dispersed in the water. Incidentally, the term "dispersed" means that at least some of the component is in the state of having not been dissolved in the water, and a suspended state and an emulsified state are also included therein.

1. Water-dispersed pressure-sensitive adhesive composition, Pressure-sensitive adhesive layer, and Pressure-sensitive adhesive sheet

(1) Water-dispersed pressure-sensitive adhesive composition

Embodiments for preparing the water-dispersed pressure-sensitive adhesive composition of the invention are explained below.
The water-dispersed pressure-sensitive adhesive composition of the invention is characterized by including a (meth)acrylic polymer obtained by polymerizing monomer ingredient(s) including as a main component a (meth)acrylic acid alkyl ester in which the alkyl group has 1-18 carbon atoms, the content of said (meth)acrylic acid alkyl ester being 60% by weight or more of all monomers of the monomer ingredients,
a rubber ingredient which is incompatible with the (meth)acrylic polymer and which has a degree of swelling of 130% or higher upon immersion for 2 hours in a mineral-oil-based rust preventive oil having a kinetic viscosity at 40°C of 5 mm$^2$/s, and
a tackifier, wherein a blending ratio by weight of the (meth)acrylic polymer to the rubber ingredient is from 95/5 to 5/95 on a solid basis, and wherein the tackifier contains at least a tackifier having a softening point of 120°C or higher.
It is thought that since the (meth)acrylic polymer and the rubber ingredient in the water-dispersed pressure-sensitive adhesive composition of the invention are incompatible with each other, this composition forms a pressure-sensitive adhesive layer in which an acrylic phase constituted mainly of the (meth)acrylic polymer and a rubber phase constituted mainly of the rubber ingredient form a sea-island structure. It is thought that, as a result, both the acrylic phase and the rubber phase are present at the surface of the pressure-sensitive adhesive layer, and that the rubber phase absorbs the oily matter present on the adherend surface and the acrylic phase ensures adhesiveness to the adherend.
Each component is explained below.

(i) (Meth)acrylic Polymer

The (meth)acrylic polymer can be obtained by polymerizing monomer ingredient(s) including, as a main component, (A) a (meth)acrylic acid alkyl ester in which the alkyl group has 1-18 carbon atoms. The monomer ingredients are not limited so long as the (meth)acrylic acid alkyl ester is included therein as a main component, and there are no particular limitations on the other component(s). For example, the monomer ingredients may be made to suitably include, according to need, monomers such as (B) a reactive functional group-containing unsaturated monomer and (C) an unsaturated monomer which is copolymerizable with the (meth)acrylic acid alkyl ester (A) and the reactive functional group-containing unsaturated monomer (B). The term "main component" herein means that the content of the component is 60% by weight or more of all the monomers of the monomer ingredients.

As the (meth)acrylic acid alkyl ester (A) in which the alkyl group has 1-18 carbon atoms, compounds represented by the following general formula (1) can be mentioned.

[Chem. 1]

$$H_2C=CR^1COOR^2 \qquad (1)$$

(In general formula (1), $R^1$ is a hydrogen atom or a methyl group, and $R^2$ represents a linear or branched alkyl group having 1-18 carbon atoms.)

Examples of $R^2$ in general formula (1) include methyl, ethyl, propyl, isopropyl, butyl, isobutyl, sec-butyl, t-butyl, pentyl, neopentyl, isoamyl, hexyl, heptyl, octyl, 2-ethylhexyl, isooctyl, nonyl, isononyl, decyl, isodecyl, undecyl, dodecyl, tridecyl, tetradecyl, pentadecyl, hexadecyl, heptadecyl, and octadecyl. The number of carbon atoms of the alkyl group in the (meth)acrylic acid alkyl ester is more preferably 2-18, further preferably 4-12.

Specific examples of the (meth)acrylic acid alkyl esters represented by general formula (1) include methyl (meth)acrylate, ethyl (meth)acrylate, propyl (meth)acrylate, isopropyl (meth)acrylate, butyl (meth)acrylate, isobutyl (meth)acrylate, sec-butyl (meth)acrylate, t-butyl (meth)acrylate, pentyl (meth)acrylate, neopentyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, and octadecyl (meth)acrylate. These (meth)acrylic acid alkyl esters may be used either alone or in combination of two or more thereof.

It is preferable that, of the (meth)acrylic acid alkyl esters (A) shown above, (A1) a (meth)acrylic acid alkyl ester in which the alkyl group has 1-6 carbon atoms and (A2) a (meth)acrylic acid alkyl ester in which the alkyl group has 7-18 carbon atoms are used in combination. The number of carbon atoms in the (meth)acrylic acid alkyl ester (A1) is more preferably 1-4, and the number of carbon atoms in the (meth)acrylic acid alkyl ester (A2) is more preferably 7-12.

In the case where the (meth)acrylic acid alkyl esters (A1) and (A2) are used in combination, the proportion of the (meth)acrylic acid alkyl ester (A2) in the (meth)acrylic acid alkyl esters (A) is preferably 10% by weight or higher, more preferably 20% by weight or higher. Namely, the (A1)/(A2) ratio (by weight) is preferably from 0/100 to 90/10, more preferably from 5/95 to 90/10, even more preferably 10/90 to 80/20. The higher the proportion of the (meth)acrylic acid alkyl ester (A2), the more quickly the oil present on the adherend can be absorbed and, hence, the more rapidly the high adhesiveness is obtained after application. By using such a combination including the (meth)acrylic acid alkyl ester (A1), oil-absorbing properties can be balanced with cohesive force.

Suitable for use as the (meth)acrylic acid alkyl ester (A1) is methyl acrylate or butyl acrylate. Suitable for use as the (meth)acrylic acid alkyl ester (A2) is 2-ethylhexyl acrylate.

The proportion of the (meth)acrylic acid alkyl ester(s) (A) described above, in which the alkyl group has 1-18 carbon atoms, is preferably 60% by weight or higher, more preferably 60-99.5% by weight, even more preferably 70-99% by weight, based on all the monomer ingredients.

The monomer ingredients can include (B) a reactive functional group-containing unsaturated monomer which contains a reactive functional group in its molecule, besides the (meth)acrylic acid alkyl esters described above. The inclusion of the reactive functional group- containing unsaturated monomer (B) makes it possible to form a crosslinked structure, and is preferred because it is possible to form an adhesive which is excellent in terms of holding property, unsusceptibility to edge peeling, and unsusceptibility to constant-load peeling.

Examples of the reactive functional group-containing unsaturated monomer (B) include monomers which has a polymerizable functional group having an unsaturated double bond, such as a (meth)acryloyl group or a vinyl group, and which further has another reactive functional group. Also usable are monomers having a reactive functional group which contains an unsaturated double bond, such as a maleimide group or an itaconimide group. In the invention, however, siliconcontaining groups such as alkoxysilyl groups are excluded from the reactive functional group.

The term reactive functional group means a functional group which is capable of reacting with a crosslinking agent to form a covalent bond and/or a coordinate bond with the crosslinking agent. Examples of the reactive functional group include a carboxyl group, hydroxyl group, epoxy group, amino group, amide group, maleimide group, itaconimide group, succinimide group, sulfonic group, phosphate group, isocyanate group, and alkoxy group. Only one of such reactive functional groups may be contained, or two or more thereof may be contained. Preferred of those reactive functional groups are a carboxyl group, hydroxyl group, amino group, and epoxy group. More preferred is at least one member selected from the group consisting of a carboxyl group and a hydroxyl group.

Specific examples of the reactive functional group- containing unsaturated monomer (B) include: unsaturated carboxylic acids such as (meth)acrylic acid, itaconic acid, maleic acid, fumaric acid, crotonic acid, and cinnamic acid;

monoesters of unsaturated dicarboxylic acids, such as monomethyl itaconate, monobutyl itaconate, and 2-acryloyloxyethyl phthalate; monoesters of unsaturated tricarboxylic acids, such as 2-methacryloyloxyethyl trimellitate and 2-methacryloyloxyethyl pyromellitate; carboxyalkyl acrylates such as carboxyethyl acrylates (e.g., $\beta$-carboxyethyl acrylate) and carboxypentyl acrylates; acrylic acid dimer (trade name "Aronix M-5600", manufactured by Toagosei Chemical Industry Co., Ltd.) and acrylic acid trimer; carboxyl group-containing unsaturated monomers such as unsaturated dicarboxylic acid anhydrides, e.g., itaconic anhydride, maleic anhydride, and fumaric anhydride; hydroxyl group-containing unsaturated monomers such as 2-hydroxyethyl acrylate, 2-hydroxypropyl acrylate, and 2-hydroxybutyl acrylate; epoxy group-containing unsaturated monomers, such as glycidyl (meth)acrylate and methylglycidyl (meth)acrylate; amino-group containing unsaturated monomers such as aminoethyl (meth)acrylate, N,N-dimethylaminoethyl (meth)acrylate, and t-butylaminoethyl (meth)acrylate; amide group-containing unsaturated monomers, such as (meth)acrylamide, N,N-dimethyl(meth)acrylamide, N,N-diethyl(meth)acrylamide, N-isopropyl(meth)acrylamide, N-butyl(meth)acrylamide, N-methoxymethyl(meth)acrylamide, N-methylol(meth)acrylamide, and N-methylolpropane(meth)acrylamide; cyano-group containing unsaturated monomers such as (meth)acrylonitrile; maleimide group-containing monomers, such as N-cyclohexylmaleimide, N-isopropylmaleimide, N-laurylmaleimide, and N-phenylmaleimide; itaconimide group-containing monomers, such as N-methylitaconimide, N-ethylitaconimide, N-butylitaconimide, N-octylitaconimide, N-2-ethylhexylitaonimide, N-cyclohexylitaonimide, and N-laurylitaconimide; succinimide group- containing monomers , such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl group- containing heterocyclic compounds, such as N-vinylpyrrolidone, N-(1-methylvinyl)pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, and (meth)acryloylmorpholine; sulfonic group-containing unsaturated monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; phosphate group- containing unsaturated monomers, such as 2-hydroxyethyl acryloylphosphate; and functional monomers such as 2-methacryloyloxyethyl isocyanate. These monomers may be used either alone or in combination of two or more thereof.

The proportion of the reactive functional group-containing unsaturated monomer (B), in the monomer ingredients, is preferably 40% by weight or less, more preferably 0.5-12% by weight, even more preferably 1-10% by weight, based on all the monomer ingredients. By incorporating the reactive functional group-containing unsaturated monomer (B) in an amount within the range shown above and in the case where a crosslinking agent having crosslinking reactivity with the functional group is used, the acrylic polymer being obtained and the crosslinking agent can be made to satisfactorily form a crosslinked structure, making it possible to form an adhesive which is excellent in terms of holding property, unsusceptibility to edge peeling, unsusceptibility to constant-load peeling, etc, which is hence preferred.

Examples of the unsaturated monomer (C), which is copolymerizable with the (meth)acrylic acid alkyl ester (A) in which the alkyl group has 1-18 carbon atoms and with the reactive functional group- containing unsaturated monomer (B), include vinyl ester group-containing monomers, such as, for example, vinyl acetate, aromatic unsaturated monomers such as, for example, styrene and vinyltoluene, (meth)acrylic acid cycloalkyl ester monomers such as, for example, cyclopentyl di(meth)acrylate and isobornyl (meth)acrylate, vinyl group-containing heterocyclic compounds, such as, for example, N-vinylpyrrolidone, N-(1-methylvinyl)pyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, and (meth)acryloylmorpholine, alkoxy group-containing unsaturated monomers such as, for example, methoxyethyl (meth)acrylate and ethoxyethyl (meth)acrylate, olefin monomers such as, for example, ethylene, propylene, isoprene, butadiene, and isobutylene, vinyl ether monomers such as, for example, vinyl ether, halogen atom-containing unsaturated monomers, such as, for example, vinyl chloride, and acrylic acid ester monomers containing a heterocycle or a halogen atom, such as, for example, tetrahydrofurfuryl (meth)acrylate and fluoro(meth)acrylates.

The unsaturated monomer (C) may further include a polyfunctional monomer having two or more unsaturated groups in the molecule. Examples of the polyfunctional monomer include: (mono or poly)ethylene glycol di(meth)acrylates such as ethylene glycol di(meth)acrylate, diethylene glycol di(meth)acrylate, triethylene glycol di(meth)acrylate, trimethylolpropane tri(meth)acrylate, and tetraethylene glycol di(meth)acrylate; (mono or poly)alkylene glycol di(meth)acrylates including (mono or poly)propylene glycol di(meth)acrylates such as propylene glycol di(meth)acrylate; (meth)acrylic acid esters of polyhydric alcohols, such as neopentyl glycol di(meth)acrylate, 1,6-hexanediol di(meth)acrylate, tetramethylolmethane tri(meth)acrylate, pentaerythritol di(meth)acrylate, trimethylolpropane tri(meth)acrylate, pentaerythritol tri(meth)acrylate, and dipentaerythritol hexa(meth)acrylate; and divinylbenzene. Examples of the polyfunctional monomer further include epoxy acrylates, polyester acrylates, and urethane acrylates. These unsaturated monomers (C) may be suitably used alone or in combination.

Furthermore, examples of the unsaturated monomer ingredient (C) include alkoxysilyl group-containing vinyl monomers. Examples of the alkoxysilyl group-containing vinyl monomers include silicone-based (meth)acrylate monomers and silicone-based vinyl monomers.

Examples of the silicone-based (meth)acrylate monomers include (meth)acryloyloxyalkyltrialkoxysilanes such as, for example, (meth)acryloyloxymethyltrimethoxysilane, (meth)acryloyloxymethyltriethoxysilane, 2-(meth)acryloyloxyethyltrimethoxysilane, 2-(meth)acryloyloxyethyltriethoxysilane, 3-(meth)acryloyloxypropyltrimethoxysilane, 3-(meth)acryloyloxypropyltriethoxysilane, 3-(meth)acryloyloxypropyltripropoxysilane, 3-(meth)acryloyloxypropyltriisopropoxysilane, and 3-(meth)acryloyloxypropyltributoxysilane, (meth)acryloyloxyalkylalkyldialkoxysilanes such as, for example, (meth)acryloyloxymethylmethyldimethoxysilane, (meth)acryloyloxymethylmethyldiethoxysilane, 2-(meth)acryloyloxyethylmethyldimethoxysi lane, 2-(meth)acryloyloxyethylmethyldiethoxysilane, 3-(meth)acryloyloxypropylmethyldimethoxysilane, 3-(meth)acryloyloxypropylmethyldiethoxysilane, 3-(meth)acryloyloxypropylmethyldipropoxysilane, 3-(meth)acryloyloxypropylmethyldiisopropoxysilane, 3-(meth)acryloyloxypropylmethyldibutoxysilane, 3-(meth)acryloyloxypropylethyldimethoxysilane, 3-(meth)acryloyloxypropylethyldiethoxysilane, 3-(meth)acryloyloxypropylethyldipropoxysilane, 3-(meth)acryloyloxypropylethyldiisopropoxysilane, 3-(meth)acryloyloxypropylethyldibutoxysilane, 3-(meth)acryloyloxypropylpropyldimethoxysilane, and 3-(meth)acryloyloxypropylpropyldiethoxysilane, and the (meth)acryloyloxyalkyldialkyl(mono)alkoxysilanes which correspond to these (meth)acrylate monomers.

Examples of the silicone-based vinyl monomers include: vinyltrialkoxysilanes such as, for example, vinyltrimethoxysilane, vinyltriethoxysilane, vinyltripropoxysilane, vinyltriisopropoxysilane, and vinyltributoxysilane and the vinylalkyldialkoxysilanes and vinyldialkylalkoxysilanes which correspond to these vinyl monomers; and vinalkyltrialkoxysilanes such as, for example, vinylmethyltrimethoxysilane, vinylmethyltriethoxysilane, β-vinylethyltrimethoxysilane, β-vinylethyltriethoxysilane, γ-vinylpropyltrimethoxysilane, γ-vinlpropyltriethoxysilane, y-vinylpropyltripropoxysilane, γ-vinylpropyltriisopropoxysilane, and γ-vinylpropyltributoxysilane and the (vinylalkyl)alkyldialkoxysilanes and (vinylalkyl)dialkyl(mono)alkoxysilanes which correspond to these vinyl monomers.

By using such an alkoxysilyl-group containing vinyl monomer as the unsaturated monomer ingredient (C), alkoxysilyl groups are introduced into the polymer chain and a crosslinked structure can be formed through reaction between the alkoxysilyl groups, which is hence preferred.

The proportion of the unsaturated monomer (C) in the monomer ingredients is preferably 0-39.5% by weight, more preferably 0-29% by weight, based on all the monomer ingredients. In the case of using an alkoxysilyl-group containing vinyl monomer as the unsaturated monomer (C), the proportion of this monomer to be incorporated is preferably 0-10% by weight, more preferably 0-5% by weight, even more preferably 0-1% by weight, based on all the monomer ingredients.

The (meth)acrylic polymer according to the invention is obtained by polymerizing the monomer ingredients described above by a polymerization method, e.g., emulsion polymerization.

In emulsion polymerization, the monomer ingredients are mixed with a polymerization initiator and an emulsifier in water and optionally with a chain transfer agent, etc. and polymerized. More specifically, use can be made of a known emulsion polymerization method such as, for example, the en bloc monomer introduction method (en bloc polymerization method), monomer dropping method, or monomer emulsion dropping method. In the monomer dropping method, continuous dropping or dropping in installments is suitably selected. Although reaction conditions are suitably selected, the polymerization temperature is, for example, 20-100°C.

The polymerization initiator is not particularly limited, and use is made of a polymerization initiator in common use in emulsion polymerization. Examples thereof include azo initiators such as, for example, 2,2'-azobisisobutyronitrile, 2,2'-azobis(2-methylpropionamidine) disulfate, 2,2'-azobis(2-methylpropionamidine) dihydrochloride, 2,2'-azobis(2-amidinopropane) dihydrochloride, 2,2'-azobis[N-(2-carboxyethyl)-2-methylpropionamidine] hydrates, 2,2'-azobis(N,N'-dimethyleneisobutylamidine), and 2,2'-azobis[2-(2-imidazolin-2-yl)propane] dihydrochloride, persulfate initiators such as, for example, potassium persulfate and ammonium persulfate, peroxide initiators such as, for example, benzoyl peroxide, t-butyl hydroperoxide, and hydrogen peroxide, substituted-ethane initiators such as, for example, phenyl-substituted ethane, carbonyl initiators such as, for example, aromatic carbonyl compounds, and redox initiators such as, for example, a combination of a persulfate and sodium hydrogen sulfite and a combination of a peroxide and sodium ascorbate.

These polymerization initiators may be suitably used alone or in combination. The amount of the polymerization initiator to be incorporated is suitably selected. However, the amount thereof per 100 parts by weight of the sum of the monomer ingredients is, for example, preferably 0.005-1 part by weight, more preferably 0.01-0.8 parts by weight.

The emulsifier is not particularly limited, and use is made of an emulsifier in common use in emulsion polymerization. Examples thereof include: anionic emulsifiers such as sodium lauryl sulfate, ammonium lauryl sulfate, sodium dodecylbenzenesulfonate, polyoxyethylene sodium lauryl sulfate, polyoxyethylene alkyl ether sodium sulfates, polyoxyethylene alkylphenyl ether ammonium sulfates, polyoxyethylene alkylphenyl ether sodium sulfates, and polyoxyethylene sodium alkylsulfosuccinates; and nonionic surfactants such as polyoxyethylene alkyl ethers, polyoxyethylene alkylphenyl ethers, polyoxyethylene fatty acid esters, and polyoxyethylene/polyoxypropylene block polymers. Use may also be made of a radical-polymerizable (reactive) emulsifier (e.g., HS-10 (manufactured by Dai-ichi Kogyo Seiyaku Co., Ltd.)) obtained by introducing a radical-polymerizable functional group (reactive group) such as a propenyl group or an allyl ether group into any of those anionic emulsifiers and nonionic emulsifiers.

These emulsifiers may be suitably used alone or in combination. The amount of the emulsifier to be incorporated is, for example, preferably 0.2-10 parts by weight, more preferably 0.5-5 parts by weight, per 100 parts by weight of the sum of the monomer ingredients.

The chain transfer agent is used for regulating the molecular weight of the polymer according to need, and use is made of a chain transfer agent in common use in emulsion polymerization. Examples thereof include mercaptans such as 1-dodecanethiol, t-dodecanethiol, mercaptoacetic acid, 2-mercaptoethanol, 2-ethylhexyl thioglycolate, and 2,3-dimethrcapto-1-propanol. These chain transfer agents may be suitably used alone or in combination. The amount of the chain transfer agent to be incorporated is, for example, 0.001-0.5 parts by weight per 100 parts by weight of the sum of the monomer ingredients.

For the purpose of improving the stability of the (meth)acrylic polymer, the pH of the system may be adjusted to, for example, 7-9, preferably 7-8, with, for example, ammonia water.

(ii) Rubber Ingredient

The water-dispersed pressure-sensitive adhesive composition of the invention contains a rubber ingredient which is incompatible with the (meth)acrylic polymer and which has a degree of swelling of 130% or higher upon immersion for 2 hours in a mineral-oil-based rust preventive oil having a kinetic viscosity at 40°C of 5 mm$^2$/s. Since this rubber ingredient can quickly absorb the oily matter present on the adherend surface, adhesiveness to oily surfaces can be improved.

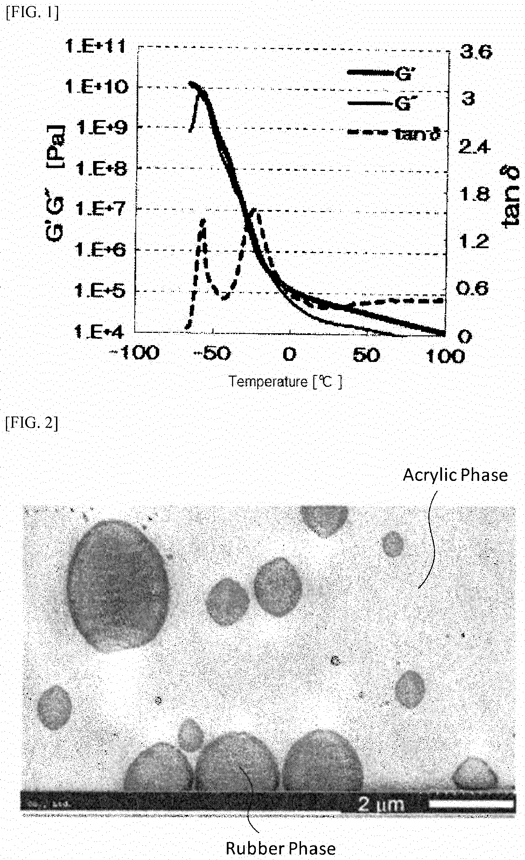

In the pressure-sensitive adhesive layer formed from the water-dispersed pressure-sensitive adhesive composition of the invention, the (meth)acrylic polymer is present in the state of being incompatible with the rubber ingredient. Whether the (meth)acrylic polymer ingredient and the rubber ingredient are in a compatible state can be ascertained from a loss modulus curve and a loss tangent curve which are obtained by examining the pressure-sensitive adhesive layer for dynamic viscoelasticity, specifically from the peak assigned to the (meth)acrylic polymer and the peak assigned to the rubber ingredient. For example, in the case where the loss modulus (G") curve or loss tangent (tan$\delta$) curve obtained by a dynamic viscoelasticity examination has two peaks, i.e., a peak assigned to the (meth)acrylic polymer ingredient and a peak assigned to the rubber ingredient, as shown in Fig. 1, this curve indicates that the (meth)acrylic polymer ingredient and the rubber ingredient are in the state of being incompatible with each other.

In the invention, dynamic viscoelasticity is determined on the basis of "(2) Ascertainment of Compatibility between (Meth)acrylic Polymer and Rubber Ingredient" described in Examples which will be given later.

Incidentally, in cases when the rubber ingredient and the (meth)acrylic polymer are in the state of being incompatible with each other, the adhesive which has been dried has a sea-island structure configured of an acrylic phase constituted mainly of the (meth)acrylic polymer and a rubber phase constituted mainly of the rubber ingredient. Such a structure can be visually ascertained, for example, by examining a section of the dried adhesive using a transmission electron microscope (TEM) as shown in Fig. 2.

Consequently, in case where the peak assigned to the (meth)acrylic polymer ingredient overlaps the peak assigned to the rubber ingredient in the loss modulus curve and loss tangent curve obtained by a dynamic viscoelasticity examination, the compatibility is determined by assessing whether a sea-island structure has been formed or not, using a transmission electron microscope (TEM). In this examination, in cases when a sea-island structure has been formed even slightly, it is deemed in the invention that the (meth)acrylic polymer and the rubber ingredient are incompatible with each other, even though there is an area where the two ingredients are compatible with each other.

The rubber ingredient to be used in the invention must have a degree of swelling of 130% or higher upon immersion for 2 hours in a mineral-oil-based rust preventive oil having a kinetic viscosity at 40°C of 5 mm$^2$/s. The degree of swelling thereof is preferably 150% or higher, more preferably 150-500%. So long as the degree of swelling thereof is within that range, this rubber ingredient can moderately take oily matter and the oily matter present on the adherend surface can be quickly absorbed. Consequently, adhesiveness to oily surfaces can be improved. Meanwhile, in case where the degree of swelling thereof is less than 130%, absorption of the oily matter present on the adherend surface is insufficient and, hence, adhesiveness to oily surfaces cannot be improved. Degrees of swelling thereof exceeding 500% may result in cases where the adhesive is plasticized to have poor cohesive force.

The mineral-oil-based rust preventive oil to be used for measuring the degree of swelling of the rubber ingredient in the invention is a rust preventive oil obtained by adding a rust preventive to a mineral oil as the base and characterized by preventing iron or steel products and other products from rusting or discoloring and by having excellent ability to remove soils and water adherent to metals.

In the invention, the degree of swelling of the rubber ingredient is measured using a mineral-oil-based rust preventive oil having a kinetic viscosity at 40°C of 5 mm$^2$/s. Mineral-oil-based rust preventive oils having too low a kinetic viscosity undesirably flow readily, while mineral-oil-based rust preventive oils having too high a kinetic viscosity are difficult to apply. Hence, ones having a kinetic viscosity at 40°C of 5 mm$^2$/s are preferred. Consequently, a mineral-oil-based rust preventive oil having a kinetic viscosity at 40°C of 5 mm$^2$/s is used in the invention to measure the degree of swelling. Incidentally, the kinetic viscosity at 40°C of the mineral-oil-based rust preventive oil to be used for measuring the degree of swelling may be in the range of 4-6 mm$^2$/s. Trade name "Preton R-303PX2" (liquid kinetic viscosity, 5.0 mm$^2$/s) (manufactured by Sugimura Chemical Industrial Co., Ltd.), which is used as the rust preventive oil in the invention, is highly suitable for general uses and has excellent lubricating properties.

In the invention, the degree of swelling of a rubber ingredient is determined on the basis of "(1) Measurement of Degree of Swelling (Oil Absorption)" described in Examples which will be given later. In the case where the rubber ingredient to be used in the invention is the rubber latex which will be described later, a dried substance obtained by drying the rubber latex at 100°C for 3 minutes can be examined as the rubber ingredient to determine the degree of swelling thereof.

In the invention, it is preferable that the rubber ingredient, when examined for dynamic viscoelasticity at a shear strain with a frequency of 1 Hz, has a loss-tangent (tan$\delta$) peak temperature of -5°C or lower. The loss-tangent peak temperature thereof is more preferably -10°C or lower, even more preferably -15°C or lower. In case where the loss-tangent peak temperature of the rubber ingredient is higher than that range, this rubber ingredient has too high a modulus of elasticity at low temperatures and this tends to result in a decrease in adhesive force. Namely, by regulating the loss-tangent peak temperature of the rubber ingredient so as to be within that range, the rubber ingredient can be made to have a low modulus of elasticity at low temperatures and an improvement in low-temperature adhesive force can be attained. There is no particular lower limit on the loss-tangent peak temperature of the rubber ingredient. However, the loss-tangent peak temperature thereof can be regulated to, for example, -130°C or higher, preferably -120°C or higher, more preferably -110°C or higher.

As stated above, dynamic viscoelasticity in the invention is determined on the basis of "(2) Ascertainment of Compatibility between (Meth)acrylic Polymer and Rubber Ingredient" described in Examples which will be given later.

Any person skilled in the art could understand how a rubber ingredient which has a degree of swelling of 130% or higher upon immersion for 2 hours in a mineral-oil-based rust preventive oil having a kinetic viscosity at 40°C of 5 mm$^2$/s and which is incompatible with the (meth)acrylic polymer is obtained by regulating the composition of the rubber ingredient, for example, by regulating the component ratio (copolymerization ratio) for producing the rubber ingredient, on the basis of the statements in this description including the Examples which will be given later and of technical common knowledge including SP values, etc.

For example, a rubber having low polarity is selected as the rubber ingredient which has a degree of swelling of 130% or higher upon immersion for 2 hours in a mineral-oil-based rust preventive oil having a kinetic viscosity at 40°C of 5 mm$^2$/s. More specifically, a rubber ingredient having an SP value in the range of 14-18 ((J/m$^3$)$^{0.5}$·10$^{-3}$) is advantageous. In the case of rubber ingredients having an SP value higher than 18 ((J/m$^3$)$^{0.5}$·10$^{-3}$), these rubber ingredients have high polarity and tend to less absorb oils.

The rubber ingredient according to the invention may be in any form. However, from the standpoint of incorporation into the water-dispersed pressure-sensitive adhesive composition, it is desirable that the rubber ingredient is in the form of an emulsion or emulsion-state latex (hereinafter often referred to as "rubber latex"), in which fine rubber-ingredient particles have been stably dispersed in water.

Examples of the rubber latex in the invention include natural-rubber latexes and synthetic-rubber latexes. In the natural-rubber latexes, the rubber may be a modified natural rubber obtained by grafting a (meth)acrylic acid alkyl ester onto natural rubber.

The synthetic-rubber latexes are aqueous dispersions of synthetic polymers. Examples of the kinds of the synthetic polymers include polyisoprene rubbers, styrene/butadiene rubbers (SBR), styrene/butadiene/vinylpyridine rubbers, polybutadiene rubbers, methyl methacrylate/butadiene rubbers, acrylonitrile/butadiene rubbers (NBR), and polychloroprene rubbers (CR).

It is preferred to use natural rubber, polyisoprene rubber, polybutadiene rubber, or styrene/butadiene rubber among those latexes.

Commercial products of such latexes can be used. Examples of polyisoprene latexes include "Sepolex IR-100K", manufactured by Sumitomo Seika Chemicals Co., Ltd., examples of polybutadiene latexes include "Nipol Series", manufactured by Nippon Zeon Co., Ltd., and examples of styrene/butadiene latexes include "Nipol Series", manufactured by Nippon Zeon Co., Ltd., "Lacstar Series", manufactured by DIC Inc., and "Nalster Series", manufactured by Nippon A&L Inc. Examples of commercial products of other rubber latexes are as follows. Examples of styrene/butadiene/vinylpyridine latexes include "Nipol Series", manufactured by Nippon Zeon Co., Ltd., and "Pyratex Series", manufactured by Nippon A&L Inc. Examples of MMA/polybutadiene latexes include "Nalstar Series", manufactured by Nippon A&L Inc. Examples of acrylonitrile/butadiene latexes include "Nipol Series", manufactured by Nippon Zeon Co., Ltd., "Cyatex Series", manufactured by Nippon A&L Inc., and "Lacstar Series", manufactured by DIC Inc. Examples of chloroprene latexes include "Shoprene Series", manufactured by Showa Denko K.K., and "Skyprene Series", manufactured by Tosoh Corp.

In the case of using such a rubber ingredient in the invention, the blending ratio by weight of the (meth)acrylic polymer to the rubber ingredient ((meth)acrylic polymer/rubber ingredient) is from 95/5 to 5/95, preferably from 95/5 to 30/70, more preferably from 90/10 to 60/40. In case where the proportion of the rubber ingredient is smaller than the range shown above, the oily matter present on the adherend surface cannot be completely absorbed and sufficient adhesiveness to oily surfaces cannot be obtained. Meanwhile, in case where the proportion of the acrylic polymer ingredient is smaller than the range shown above, adhesive force and holding power in application to polar adherends, e.g., SUS, are not sufficiently obtained.

In the invention, in the case where a latex which contains a rubber ingredient is used, the solid content of this rubber latex can be taken as the weight of the rubber ingredient contained in the rubber latex. With respect to the solid contents of rubber latexes, in the case of using a commercial rubber latex, the value of solid content given in the specification, or a catalog can be used. Alternatively, the rubber latex is dried at 100°C for 3 minutes and the weight of the resultant dried substance can be taken as the weight of the rubber ingredient contained in the rubber latex. Consequently, in the case of using a rubber latex in the invention, the blending ratio by weight of the (meth)acrylic polymer to the rubber latex ((meth)acrylic polymer/rubber latex) on a solid basis is from 95/5 to 5/95, preferably from 95/5 to 30/70, more preferably from 90/10 to 60/40.

(iii) Tackifier

The water-dispersed pressure-sensitive adhesive composition of the invention contains a tackifier. The inclusion of a tackifier produces the following effects. When the pressure-sensitive adhesive sheet is applied to a surface smeared with oily matter, the adherend-side surface thereof is made tough after the rubber ingredient absorbs and removes the oily matter, thereby giving high adhesive force. In addition, it is thought that in a wide temperature range including low temperatures, the rubber phase has a reduced modulus of elasticity and the adherend-wetting properties are improved, thereby giving better adhesive force.

It is desirable in the invention that the tackifier be compatible with the (meth)acrylic polymer. The compatibility of the tackifier with the (meth)acrylic polymer produces the effect of rendering the adherend-side surface tough after the oily matter is absorbed and removed. The tackifier to be used may be any one of the tackifiers which will be shown later, or two or more thereof may be used in combination. In the case of using two or more tackifiers in combination, this combination is not limited so long as at least one of the tackifiers is compatible with the (meth)acrylic polymer. It is, however, more preferable that the mixture of tackifiers is compatible with the (meth)acrylic polymer. It is even more preferable that all the tackifiers to be used are compatible with the (meth)acrylic polymer.

The compatibility of the tackifier can be determined from the haze of the pressure-sensitive adhesive sheet which has been dried. Specifically, the compatibility thereof is determined on the basis of the method described in "(3) Ascertainment of Compatibility between (Meth)acrylic Polymer and Tackifier" in Examples which will be given later. Namely, in the case where the calculated value of haze is 50% or less (0-50%), the two ingredients are deemed to be compatible, and in the case where the calculated value of haze is higher than 50%, the two ingredients are deemed to be incompatible. It is preferable in the invention that a tackifier to be used in combination with the (meth)acrylic polymer should be selected so that the pressure-sensitive adhesive sheet produced has a haze of preferably 45% or less, more preferably 40% or less.

Examples of such a tackifier include tackifier resins. Examples thereof include: rosin-based resins such as rosin esters, hydrogenated rosin esters, disproportionated rosin esters, and polymerized rosin esters; coumarone-indene-based resins such as coumarone-indene resins, hydrogenated coumarone-indene resins, phenol-modified coumarone-indene resins, and epoxy-modified coumarone-indene resins; α-pinene resins and β-pinene resins; terpene-based resins such as polyterpene resins, hydrogenated terpene resins, aromatic-modified terpene resins, and terpene-phenol resins; petroleum resins such as aliphatic petroleum resins, aromatic petroleum resins, and aromatic-modified aliphatic petroleum resins; and acrylic oligomers. These tackifier resins can be used alone or in combination of two or more thereof. Preferred of these are rosin-based resins, terpene-based resins, and coumarone-indene resins. It is especially preferred to use a rosin-based resin.

The tackifier includes at least a tackifier having a softening point of 120°C or higher. It is preferable that the tackifier includes at least a tackifier having a softening point of 140°C or higher. Use of a tackifier having a softening point of 120°C or higher produces the following effect. When the pressure-sensitive adhesive sheet is applied to a surface smeared with oily matter, the adherend-side surface thereof is made tough after the rubber ingredient absorbs and removes the oily matter, thereby giving high adhesive force. Although there is no particular upper limit on the softening point of the tackifier, the softening point thereof is usually 180°C or lower. The softening points of tackifier resins can be measured on the basis of, for example, the ring-and-ball method (JIS K-5902).

Examples of the tackifier having a softening point of 120°C or higher include: "Super Ester NS-120B" (softening point, 120°C), "Super Ester E-625" (softening point, 120°C), "Super Ester E-865NT" (softening point, 160°C), "Super Ester E-650NT" (softening point, 160°C), "Super Ester KE-802" (softening point, 170°C), "Tamanol E-100" (softening point, 150°C), "Tamanol E-200NT" (softening point, 150°C), "Pensel D-125" (softening point, 125°C), "Pensel D-135" (softening point, 135°C), and "Pensel D-160" (softening point, 160°C), manufactured by Arakawa Chemical Industries, Ltd.; and "Hariester SK-508H" (softening point, 130°C), "Hariester SK-816E" (softening point, 145°C), "Hariester SK-822E" (softening point, 170°C), "Hariester SK-323NS" (softening point, 125°C), and "Hariester AD-130" (softening point, 130°C), manufactured by Harima Chemicals, Inc. However, the tackifier is not limited to these examples. Such tackifiers may be suitably used alone or in combination.

It is also possible to use a combination with a tackifier having a softening point lower than 120°C. Examples of such tackifiers include: "Super Ester E-720" (softening point, 100°C), "Super Ester NS-100H" (softening point, 100°C), and "Super Ester A-100" (softening point, 100°C), manufactured by Arakawa Chemical Industries, Ltd.; "Hariester SK-90D-55" (softening point, 90°C), "Hariester SK-218NS" (softening point, 100°C), "Hariester TF" (softening point, 80°C), "Hariester DS-90" (softening point, 90°C), and "LP-915" (softening point, 100°C), manufactured by Harima Chemicals, Inc.; and "Nanolet R1050" (softening point, 105°C), manufactured by Yasuhara Chemical Co., Ltd. However, the tackifier having a softening point lower than 120°C is not limited to these examples. Of such tackifiers having a softening point lower than 120°C, those which are liquid at room temperature undesirably reduce the strength of the adherend-side surface even through the oil present on the adherend surface is removed. It is therefore undesirable to use such tackifier alone.

Preferred examples of the acrylic oligomers include a polymer which includes as a component a (meth)acrylate having a high glass transition temperature (Tg) and which has a weight-average molecular weight of 1,000-30,000. The softening point of an acrylic oligomer can be suitably set on the basis of the kinds of monomers to be used, and either an acrylic oligomer having a softening point exceeding 115°C or an acrylic oligomer having a softening point of 115°C or lower can be obtained. In general, the softening point of an oligomer can be regarded as [(glass transition temperature of the oligomer (°C) + 50°C)±5°C] (Takumi OKAZAKI, Setchaku No Gijutsu, 20(2), 13 (2000)).

Examples of the (meth)acrylate having a high Tg include dicyclopentanyl methacrylate (Tg of homopolymer, 175°C), cyclohexyl methacrylate (Tg of homopolymer, 66°C), isobornyl methacrylate (Tg of homopolymer, 173°C), isobornyl acrylate (Tg of homopolymer, 97°C), dicyclopentanyl acrylate (Tg of homopolymer, 120°C), 1-adamantyl methacrylate (Tg of homopolymer, 250°C), 1-adamantyl acrylate (Tg of homopolymer, 153°C), cyclohexyl acrylate (Tg of homopolymer, 15°C), isobutyl methacrylate (Tg of homopolymer, 48°C), and methyl methacrylate (Tg of homopolymer, 105°C). One of these monomers can be used alone, or a mixture of two or more thereof can be used. Preferred of these are monomers which each give a homopolymer having a Tg of 0°C or higher. More preferred are monomers which each give a homopolymer having a Tg of 50°C or higher. Even more preferred are monomers which each give a homopolymer having a Tg of 100°C or higher. The weight-average molecular weight of the acrylic oligomer is more preferably 1,500-20,000, even more preferably 2,000-10,000.

The term "Tg of homopolymer" means the glass transition temperature of a homopolymer of the monomer. Namely, that term means the glass transition temperature (Tg) of a polymer formed from a certain monomer (sometimes referred to as "monomer X") as the only monomer ingredient. Specifically, values are given in Polymer Handbook (third edition, John Wiley & Sons, Inc., 1989). In the case of the glass transition temperature (Tg) of a homopolymer not shown in the document, that term means a value obtained by the following measuring method.

(Method for Measuring Tg of Homopolymer)

Into a reactor equipped with a thermometer, stirrer, nitrogen introduction tube, and reflux condenser are introduced 100 parts by weight of monomer X, 0.2 parts by weight of 2,2'-azobisisobutyronitrile, and 200 parts by weight of ethyl acetate as a polymerization solvent. The contents are stirred for 1hour while introducing nitrogen gas. After the oxygen present in the polymerization system is thus removed, the contents are heated to 63°C and reacted for 10 hours. The reaction mixture is then cooled to room temperature to obtain a homopolymer solution having a solid concentration of 33% by weight. Subsequently, this homopolymer solution is applied by casting on a release liner and dried to produce a test sample (sheet-form homopolymer) having a thickness of about 2 mm. About 1-2 mg portion of this test sample is placed in an open cell made of aluminum, and examined with a temperature-modulation DSC (trade name Q-2000, manufactured by TA Instruments) in a nitrogen atmosphere of 50 mL/min at a heating rate of 5 °C/min to obtain a reversing heat flow (specific-heat component) behavior of the homopolymer. The temperature corresponding to the point in the resultant reversing heat flow at which a straight line that lies at the same distance, along the ordinate direction, from a straight line obtained by extending the low-temperature-side base line and from a straight line obtained by extending the high-temperature-side base line intersects the curve of the stepwise changing part due to a glass transition is taken as the glass transition temperature (Tg) of the homopolymer.

The amount of the tackifier to be incorporated is, for example, preferably 15-50 parts by weight, more preferably 20-45 parts by weight, even more preferably 25-40 parts by weight, per 100 parts by weight of the sum of the (meth)acrylic polymer and the rubber ingredient (or the solid components of the rubber latex). In case where the amount thereof is less than that range, there is a tendency that the rubber phase in the pressure-sensitive adhesive layer does not have a sufficiently reduced modulus of elasticity and sufficient adherend-wetting properties are not obtained. In case where the amount thereof exceeds that range, the rubber phase has an elevated glass transition temperature and an increased modulus of elasticity at low temperatures and, hence, there is a tendency that sufficient adherend-wetting properties are not obtained at low temperatures, resulting in a decrease in adhesive force.

The form in which a tackifier resin is to be added is not particularly limited. Usually, however, a suitable method is to add a tackifier resin in the form of an aqueous dispersion prepared beforehand by dispersing the tackifier resin in water. As such an aqueous dispersion of a tackifier resin, a commercial one may be used. Alternatively, use may be made of a dispersion obtained by forcedly dispersing a desired tackifier resin in water using a disperser.

(iv) Crosslinking Agent

It is preferable that the water-dispersed pressure-sensitive adhesive composition of the invention contains a crosslinking agent which reacts with the reactive functional group. The crosslinking agent is not particularly limited so long as the crosslinking agent is a compound which has two or more functional groups that react with the reactive functional group. Examples thereof include isocyanate-based crosslinking agents, epoxy-based crosslinking agents, oxazoline-based crosslinking agents, aziridine-based crosslinking agents, metal chelate-based crosslinking agents, and carbodiimide-based crosslinking agents. These crosslinking agents are not particularly limited, and oil-soluble or water-soluble crosslinking agents are usable.

In the case of using an epoxy-based crosslinking agent, a crosslinked structure can be formed, for example, by introducing a carboxyl group, hydroxyl group, e.g., phenolic hydroxyl group, amino group, or acid anhydride group, as the reactive functional group into the (meth)acrylic polymer.

The epoxy-based crosslinking agent is not particularly limited, and examples thereof include compounds having two or more epoxy groups in the molecule, such as epoxy resins of the bisphenol A/epichlorohydrin type, ethylene diglycidyl ether, polyethylene glycol diglycidyl ether, glycerin diglycidyl ether, glycerin triglycidyl ether, 1,6-hexanediol diglycidyl ether, trimethylolpropane triglycidyl ether, diglycidylaniline, diamineglycidylamine, N,N,N',N'-tetraglycidyl-m-xylylenediamine, and 1,3-bis(N,N'-diamineglycidylaminomethyl)cyclohexane.

Preferred of those are N,N,N',N'-tetraglycidyl-m-xylylenediamine and 1,3-bis(N,N'-diglycidylaminomethyl)cyclohexane, because these compounds show satisfactory reactivity and are capable of forming a well balanced crosslinked structure.

In the case of using an isocyanate-based crosslinking agent, a crosslinked structure can be formed, for example, by introducing a hydroxyl group, amino group, or carboxyl group, as the reactive functional group into the (meth)acrylic polymer.

The isocyanate group-containing compound is not particularly limited, and examples thereof include diphenylmethane diisocyanate (MDI), tolylene diisocyanate (TDI), hexamethylene diisocyanate (HDI), isophorone diisocyanate (IPDI), trimethylhexamethylene diisocyanate (TMDI), xylene diisocyanate (XDI), naphthalene diisocyanate (NDI), trimethylolpropane (TMP) adducts of TDI, and TMP adducts of IPDI.

In the case of using the isocyanate-based crosslinking agent, a catalyst may be used in order to accelerate the crosslinking reaction. Generally used as such catalyst is an amine-based catalyst or an organometallic catalyst. Examples thereof include amine-based catalysts such as N,N-dimethylcyclohexylamine, triethylamine, pyridine, N-methylmorpholine, N,N,N',N'-tetramethylethylenediamine, bis-2-dimethylamino ether, triethylenediamine, and triethanolamine and organometallic catalysts such as stannous octanoate, stannous oleate, dibutyltin diacetate, dibutyltin dilaurate, dimethyltin mercaptide, dimethyltin dimaleate, and lead octanoate.

One of those catalysts may be used alone, or two or more thereof may be used in combination. Usually, such a catalyst is used in an amount of 0.001-5.0 parts by weight per 100 parts by weight of the crosslinking agent.

In the case of using an oxazoline-based crosslinking agent, a crosslinked structure can be formed by introducing a carboxyl group, hydroxyl group, aromatic mercapto group, or acid anhydride group, as the reactive functional group into the (meth)acrylic polymer.

The oxazoline-based crosslinking agent is not particularly limited, and examples thereof include the crosslinking agents shown as examples in JP-A-2009-001673. Specific examples thereof include compounds having a main chain constituted of acrylic framework or styrene framework and having an oxazoline group as a side chain bonded to the main chain. Preferred examples thereof include an oxazoline group-containing acrylic polymer having a main chain constituted of acrylic framework and having an oxazoline group as a side chain bonded to the main chain.

In the case of using an aziridine-based crosslinking agent, a crosslinked structure can be formed, for example, by introducing a carboxyl group, glycidyl group, or isocyanate group, as the reactive functional group into the (meth)acrylic polymer.

The aziridine-based crosslinking agent is not particularly limited, and examples thereof include trimethylolpropane tris[3-(1-aziridinyl)propionate] and trimethylolpropane tris[3-(1-(2-methyl)aziridinyl)propionate)].

In the case of using a metal chelate-based crosslinking agent, a crosslinked structure can be formed, for example, by introducing a carboxyl group, hydroxyl group, glycidyl group, or isocyanate group, as the reactive functional group into the (meth)acrylic polymer.

The metal chelate-based crosslinking agent is not particularly limited, and examples thereof include the crosslinking agents shown as examples in JP-A-2007-063536. Specific examples thereof include aluminum chelate compounds, titanium chelate compounds, zinc chelate compounds, zirconium chelate compounds, iron chelate compounds, cobalt chelate compounds, nickel chelate compounds, tin chelate compounds, manganese chelate compounds, and chromium chelate compounds.

In the case of using a carbodiimide-based crosslinking agent, a crosslinked structure can be formed, for example, by introducing a carboxyl group, amino group, or hydroxyl group, as the reactive functional group into the (meth)acrylic polymer.

The carbodiimide-based crosslinking agent is not limited so long as this crosslinking agent has at least two carbodiimide groups in the molecule. The term carbodiimide group means a group (-N=C=NH or -N=C=N-) formed by abstracting one or the two hydrogen atoms from carbodiimide (HN=C=NH). Examples of the crosslinking agent include compounds represented by $R^3$-N=C=N-$R^4$-N=C=N-$R^5$ ($R^3$, $R^4$, and $R^5$ each represent a hydrocarbon group).

Suitable for use as the carbodiimide-based crosslinking agent is, for example, a polymer having carbodiimide groups (polycarbodiimide). Especially suitable is a polymer which has a moiety having an excellent affinity for water, such as, for example, an ethylene oxide (-$CH_2$-$CH_2$-O-) moiety, besides carbodiimide groups. Examples of commercial products of the polymer having carbodiimide groups (polycarbodiimide) which are usable as the carbodiimide-based crosslinking agent include trade names "Carbodilite V-02", "Carbodilite V-02-L2", "Carbodilite V-04", "Carbodilite E-01", and "Carbodilite E-02", manufactured by Nisshinbo Industries, Inc.

In the water-dispersed pressure-sensitive adhesive composition of the invention, the amount of the crosslinking agent to be incorporated may be suitably changed in accordance with the kind of the crosslinking agent to be used. Usually, however, the amount thereof is preferably 0.0007-10 parts by weight, more preferably 0.001-5 parts by weight, per 100 parts by weight of the (meth)acrylic polymer. By using a crosslinking agent in an amount within that range, a pressure-sensitive adhesive layer which is excellent in terms of holding property, unsusceptibility to edge peeling, and unsusceptibility to constant-load peeling can be formed.

(v) Other Ingredients

Additives which are usually added to adhesives, such as a viscosity modifier, release regulator, plasticizer, softener, filler, colorant (pigment, dye, etc.), antioxidant, surfactant, leveling agent, and defoamer, may be further added to the water-dispersed pressure-sensitive adhesive composition of the invention. The proportion of these additives is not particularly limited and can be suitably selected. It is, however, preferable that the water-dispersed pressure-sensitive adhesive composition should contain such additives in an amount of, for example, 5 parts by weight or less per 100 parts by weight of the solid components of the composition.

Examples of the viscosity modifier include acrylic modifiers of the alkali viscosity increase type, urethane-based association type modifiers, clay-based modifiers, cellulose-based modifiers, and polyamide-based modifiers. Such a viscosity modifier can be incorporated, for example, in an amount of 1% by weight or less, or 0.01-1% by weight, based on the water-dispersed pressure-sensitive adhesive composition. By using a viscosity modifier in an amount within that range, the viscosity of the water-dispersed pressure-sensitive adhesive composition can be regulated so that the composition is applicable and a pressure-sensitive adhesive sheet free from cissing and streak lines can be obtained.

(2) Pressure-sensitive adhesive layer

The pressure-sensitive adhesive layer of the invention is formed from the water-dispersed pressure-sensitive adhesive composition. Methods for forming the same are not particularly limited, and known methods can be employed. However, the pressure-sensitive adhesive layer can be formed in accordance with the following method for producing a pressure-sensitive adhesive sheet.

The pressure-sensitive adhesive layer may be obtained by applying the water-dispersed pressure-sensitive adhesive composition described above, by a known coating technique, to the substrate which will be described later and drying the composition applied. Methods for applying the water-dispersed pressure-sensitive adhesive composition to the substrate are not particularly limited, and the composition can be applied using, for example, a gravure-roll coater, reverse-roll coater, kiss-roll coater, dip-roll coater, bar coater, knife coater, spray coater, fountain-die coater, or closed-edge die coater.

The pressure-sensitive adhesive layer may be formed by applying the water-dispersed pressure-sensitive adhesive composition to a release sheet to form a pressure-sensitive adhesive layer and then transferring the pressure-sensitive adhesive layer to a substrate.

The thickness of the pressure-sensitive adhesive layer which has been dried is not particularly limited, and is, for example, preferably 500 $\mu$m or less, more preferably 5-200 $\mu$m. The drying temperature depends on the kind of the substrate, but can be, for example, 40-120°C.

The pressure-sensitive adhesive layer of the invention has a toluene insoluble content (gel content) of preferably 10-95%, more preferably 20-90%. In case where the gel content of the pressure-sensitive adhesive layer is lower than that range, sufficient cohesive force is not obtained. In case where the gel content thereof is higher than that range, the acrylic ingredient has too high a modulus of elasticity and there is a possibility that this pressure-sensitive adhesive layer might have reduced adherend-wetting properties and be unable to have sufficient adhesive force, resulting in decreases in unsusceptibility to edge peeling and to constant-load peeling. The gel content of an adhesive is determined by the following method.

The gel content of a pressure-sensitive adhesive layer is determined by the following method. The total weight of a kite string and a porous membrane made of a tetrafluoroethylene resin and having a pore diameter of 0.2 $\mu$m (trade name "Nitoflon NTF1122", manufactured by Nitto Denko Corp.) is measured beforehand (Wa mg). About 0.1 g of the adhesive is wrapped with the porous membrane into a purse form, and the mouth is tied with the kite string. Thereafter, the weight of the package is measured (Wb mg). This package is placed in a screw-cap bottle having a capacity of 50 mL, and this screw-cap bottle is filled with toluene. This bottle is allowed to stand at room temperature for 7 days. Thereafter, the package is taken out and dried at 130°C for 2 hours, and the weight of this package is measured (Wc mg). The gel content can be determined using the following equation.

$$\text{Gel content (\%)} = (Wc-Wa)/(Wb-Wa) \times 100$$

(3) Pressure-sensitive adhesive sheet

The pressure-sensitive adhesive sheet according to the invention comprises the pressure-sensitive adhesive layer.

The pressure-sensitive adhesive sheet according to the invention may be a substrate-supported pressure-sensitive adhesive sheet having a configuration which includes the pressure-sensitive adhesive layer disposed on one or each surface of a sheet-form substrate (support), or may be a substrate-less pressure-sensitive adhesive sheet having, for example, a configuration in which the pressure-sensitive adhesive layer is supported on a release sheet (which may be a sheet-form substrate equipped with a release surface). The term pressure-sensitive adhesive sheet herein means a conception which includes products called, for example, pressure-sensitive adhesive tapes, pressure-sensitive adhesive labels, or pressure-sensitive adhesive films.

The pressure-sensitive adhesive layer is typically formed continuously. However, the pressure-sensitive adhesive layer is not limited to this form. For example, the pressure-sensitive adhesive layer may be one formed in a regular pattern, e.g., dots or stripes, or in a random pattern. Furthermore, the pressure-sensitive adhesive sheet provided by the invention may be in the form of a roll or of discontinuous sheets, or may be a pressure-sensitive adhesive sheet having a configuration obtained by processing into any of various shapes.

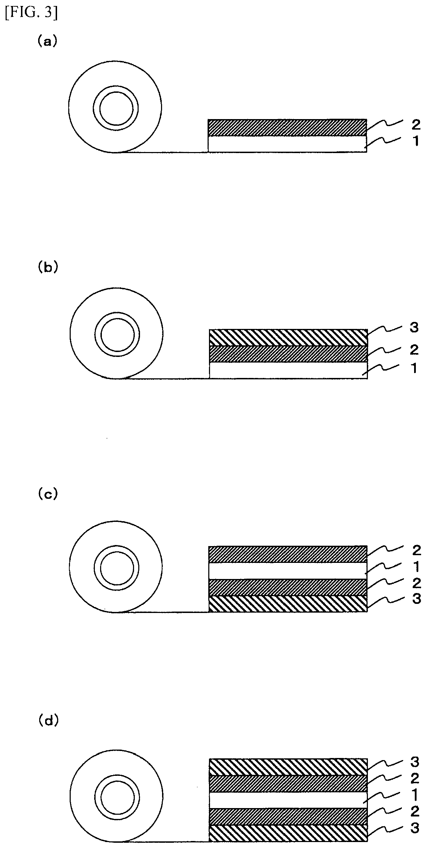

The pressure-sensitive adhesive sheet according to the invention can be one which has, for example, any of the cross-sectional structures schematically illustrated in Fig. 3 (a) to Fig. 3 (d).

Fig. 3 (a) shows an example of the configuration of a substrate-supported pressure-sensitive adhesive sheet of the one-side adhesive type, which includes a pressure-sensitive adhesive layer 2 disposed on one surface of a substrate 1. For example, when this type of pressure-sensitive adhesive sheet is wound, that surface of the substrate 1 which is on the reverse side from the surface where the pressure-sensitive adhesive layer 2 has been formed is used as a release surface. Namely, as shown in Fig. 3 (a), the pressure-sensitive adhesive sheet is wound so that the release surface of the substrate 1 on which the pressure-sensitive adhesive layer 2 has been superposed comes into contact with the pressure-sensitive adhesive layer 2 superposed on the substrate 1. Thus, the pressure-sensitive adhesive sheet can be formed into a roll.

The pressure-sensitive adhesive sheet shown in Fig. 3 (b) has a configuration wherein a pressure-sensitive adhesive layer 2 is protected with a release sheet 3 in which at least the surface thereof that faces the pressure-sensitive adhesive layer is a release surface. By winding this pressure-sensitive adhesive sheet, the pressure-sensitive adhesive sheet may be formed into a roll.

The pressure-sensitive adhesive sheet shown in Fig. 3 (c) has a configuration wherein pressure-sensitive adhesive layers 2 have been disposed respectively on both surfaces of a substrate 1 and a release sheet 3 in which each surface is a release surface has been disposed on one of the pressure-sensitive adhesive layers and wherein this pressure-sensitive adhesive sheet is wound with the other pressure-sensitive adhesive layer facing inward, thereby protecting the two pressure-sensitive adhesive layers 2. The pressure-sensitive adhesive sheet shown in Fig. 3 (c) can be formed as a roll, for example, by forming a pressure-sensitive adhesive layer 2 beforehand on a release sheet 3, successively forming, on the pressure-sensitive adhesive layer 2, a substrate and another pressure-sensitive adhesive layer 2, and winding this structure, with said another pressure-sensitive adhesive layer facing inward.

Although pressure-sensitive adhesive layers 2 have been disposed respectively on both surfaces of the substrate 1 in the pressure-sensitive adhesive sheet shown in Fig. 3 (c), these pressure-sensitive adhesive layers 2 may be constituted of pressure-sensitive adhesives having the same composition or may be respectively constituted of pressure-sensitive adhesives differing in composition.

The pressure-sensitive adhesive sheet shown in Fig. 3 (d) has a configuration wherein pressure-sensitive adhesive layers 2 have been disposed respectively on both surfaces of a substrate 1 and each of these pressure-sensitive adhesive layers 2 is protected with a release sheet 3 in which at least the surface thereof which faces the pressure-sensitive adhesive layer is a release surface. The pressure-sensitive adhesive sheet shown in Fig. 3 (d) can be formed as a roll, for example, by forming a pressure-sensitive adhesive layer 2 beforehand on a release sheet 3, applying this pressure-sensitive adhesive layer 2 to the front and back surfaces of a substrate 1, and winding the resultant structure.

Although pressure-sensitive adhesive layers 2 have been disposed respectively on both surfaces of the substrate 1 in the pressure-sensitive adhesive sheet shown in Fig. 3 (d), these pressure-sensitive adhesive layers 2 may be constituted of pressure-sensitive adhesives having the same composition or may be respectively constituted of pressure-sensitive adhesives differing in composition.

Examples of materials for constituting the substrate include: films based on polyolefins such as polyethylene, polypropylene, and ethylene/propylene copolymers; films based on polyesters such as poly(ethylene terephthalate); films of plastics such as poly(vinyl chloride); paper such as kraft paper and Japanese paper; fabrics such as cotton cloth and staple-fiber cloth; nonwoven fabrics such as nonwoven polyester fabric and nonwoven vinylon fabric; and metal foils.

The plastic films may be unstretched films, or may be stretched (uniaxially stretched or biaxially stretched) films. That surface of the substrate on which a pressure-sensitive adhesive layer is to be disposed may have undergone coating with a primer or a surface treatment, e.g., corona discharge treatment.

2. Laminate

Next, embodiments for forming the laminate of the invention are explained.

The laminate of the invention includes an adherend (referred to as first adherend) having oily matter adherent to a surface thereof and the pressure-sensitive adhesive layer or pressure-sensitive adhesive sheet, and is characterized in that the pressure-sensitive adhesive layer or the pressure-sensitive adhesive layer of the pressure-sensitive adhesive sheet is applied to that surface of the adherend to which oily matter is adherent. According to need, a second adherend can be disposed on that surface of the pressure-sensitive adhesive layer or pressure-sensitive adhesive sheet which is on the reverse side from the surface where the first adherend has been applied.

Examples of materials for constituting the first adherend and second adherend include paper such as wood-free paper, paper coated by vapor deposition, polyethylene-laminated paper, kraft paper, and Japanese paper, films of plastics such as polyethylene, polypropylene, poly(ethylene terephthalate), and poly(vinyl chloride), foam of urethanes, polyesters, butyl rubbers, etc., plates of plastics such as polyethylene, polypropylene, and acrylics, decorative laminated sheets, and metallic steel plates such as iron, copper, and stainless steel. Oily matter is adherent to a surface of the first adherend. Oily matter may be adherent to a surface of the second adherend.

The oily matter adherent to the adherend surface is not particularly limited, and examples thereof include mineral oils such as rust preventive oils, process oils, pressing oils, cutting oils, engine oils, gear oils, and greases, vegetable oils such as rapeseed oil, olive oil, canola oil, and palm oil, animal oils such as lard and beef tallow, and sebaceous matter.

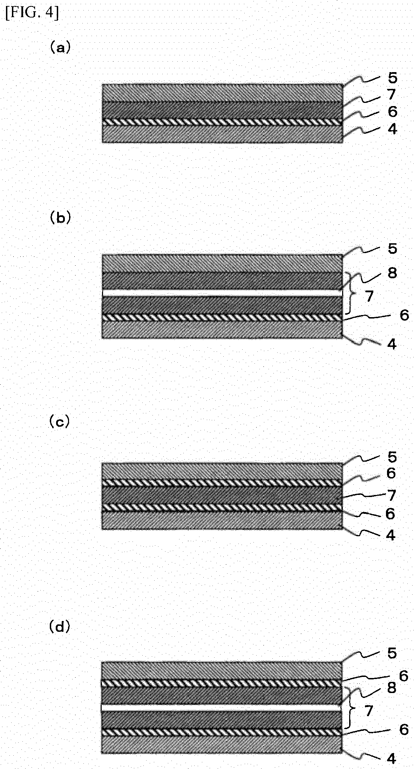

The laminate according to the invention can be one which has, for example, any of the cross-sectional structures schematically illustrated in Fig. 4 (a) to Fig. 4 (d).

Fig. 4 (a) and Fig. 4 (b) show laminate configuration examples in which oily matter is not adherent to the surface of the second adherend 5. The pressure-sensitive adhesive sheet 7 shown in Fig. 4 (a) includes no substrate (i.e., a pressure-sensitive adhesive layer itself), while the pressure-sensitive adhesive sheet 7 shown in Fig. 4 (b) includes a substrate 8. Fig. 4 (c) and Fig. 4 (d) show laminate configuration examples in which oily matter is adherent also to the surface of the second adherend 5. The pressure-sensitive adhesive sheet 7 shown in Fig. 4 (c) includes no substrate (i.e., a pressure-sensitive adhesive layer itself), while the pressure-sensitive adhesive sheet 7 shown in Fig. 4 (d) includes a substrate 8.

Although Fig. 4 (a) to Fig. 4 (d) illustrate laminates which each include a second adherend 5, these laminates may be ones in which the substrate as a component of the pressure-sensitive adhesive sheet constitutes an outermost layer in place of the second adherend 5. In the case of Fig. 4 (b), although this laminate includes a plurality of pressure-sensitive adhesive layers, these pressure-sensitive adhesive layers are not limited so long as the pressure-sensitive adhesive layer which is in contact with the first adherend 4 is the pressure-sensitive adhesive layer used in the invention. The pressure-sensitive adhesive layer which is in contact with the second adherend 5 (or the substrate) may be the pressure-sensitive adhesive layer of the invention or may be a layer of any of conventionally known adhesives without particular limitations.

The pressure-sensitive adhesive sheet of the invention can be applied to an adherend surface to which oily matter is adherent, either after the oily matter is lightly wiped off or without wiping off the oily matter. Thus, the laminate can be formed.

Examples

The invention will be explained below in more detail by reference to Examples and Comparative Examples. However, the invention should not be construed as being limited to the following Examples and Comparative Examples. In the following explanation, "parts" and "%" are by weight unless otherwise indicated.

SYNTHESIS EXAMPLE 1 (Synthesis of (meth)acrylic polymer (A))

Into a reactor equipped with a condenser, nitrogen introduction tube, thermometer, and stirrer were introduced 0.1 part of 2,2'-azobis[N-(2-carboxyethyl)-2-methylpropionamidine] hydrate (polymerization initiator) (trade name "VA-057", manufactured by Wako Pure Chemical Industries, Ltd.) and 50 parts of ion-exchanged water. The contents were stirred for 1 hour while introducing nitrogen gas. The contents were kept at 60°C, and an emulsion obtained by adding 70 parts of butyl acrylate, 30 parts of 2-ethylhexyl acrylate, 3 parts of acrylic acid, 0.03 parts of 3-methacryloyloxypropyltrimethoxysilane (trade name "KBM-503", manufactured by Shin-Etsu Chemical Co., Ltd.), 0.05 parts of n-dodecanethiol (chain transfer agent), and 2 parts of polyoxyethylene sodium lauryl sulfate (emulsifier) to 35 parts of ion-exchanged water and emulsifying the ingredients (i.e., an emulsion of starting-material monomers) was added dropwise thereto over 3 hours. After completion of the dropwise addition, the monomers were polymerized at that temperature for further 3 hours. Ten-percent ammonium water was added thereto to adjust the liquid nature to pH 7.5. Thus, a (meth)acrylic polymer (A) was obtained.

SYNTHESIS EXAMPLE 2 (Synthesis of (meth)acrylic polymer (B))

Into a reactor equipped with a condenser, nitrogen introduction tube, thermometer, and stirrer were introduced 0.1 part of 2,2'-azobis[N-(2-carboxyethyl)-2-methylpropionamidine] hydrate (polymerization initiator) (trade name "VA-057", manufactured by Wako Pure Chemical Industries, Ltd.) and 50 parts of ion-exchanged water. The contents were stirred for 1 hour while introducing nitrogen gas. The contents were kept at 60°C, and an emulsion obtained by adding 90 parts of butyl acrylate, 10 parts of 2-ethylhexyl acrylate, 4 parts of acrylic acid, 0.07 parts of 3-methacryloyloxypropyltrimethoxysilane (trade name "KBM-503", manufactured by Shin-Etsu Chemical Co., Ltd.), 0.05 parts of n-dodecanethiol (chain transfer agent), and 2 parts of polyoxyethylene sodium lauryl sulfate (emulsifier) to 35 parts of ion-exchanged water and emulsifying the ingredients (i.e., an emulsion of starting-material monomers) was added dropwise thereto over 3 hours. After completion of the dropwise addition, the monomers were polymerized at that temperature for further 3 hours. Ten-percent ammonium water was added thereto to adjust the liquid nature to pH 7.5. Thus, a (meth)acrylic polymer (B) was obtained.

SYNTHESIS EXAMPLE 3 (Synthesis of (meth)acrylic polymer (C))

Into a reactor equipped with a condenser, nitrogen introduction tube, thermometer, and stirrer were introduced 0.1 part of 2,2'-azobis[N-(2-carboxyethyl)-2-methylpropionamidine] hydrate (polymerization initiator) (trade name "VA-057", manufactured by Wako Pure Chemical Industries, Ltd.) and 50 parts of ion-exchanged water. The contents were stirred for 1 hour while introducing nitrogen gas. The contents were kept at 60°C, and an emulsion obtained by adding 85 parts of 2-ethylhexyl acrylate, 13 parts of methyl acrylate, 1.25 parts of acrylic acid, 0.75 parts of methacrylic acid, 0.02 parts of 3-methacryloyloxypropyltrimethoxysilane (trade name "KBM-503", manufactured by Shin-Etsu Chemical Co., Ltd.), 0.048 parts of t-dodecanethiol (chain transfer agent), and 2 parts of polyoxyethylene sodium lauryl sulfate (emulsifier) to 35 parts of ion-exchanged water and emulsifying the ingredients (i.e., an emulsion of starting-material monomers) was added dropwise thereto over 3 hours. After completion of the dropwise addition, the monomers were polymerized at that temperature for further 3 hours. Ten-percent ammonium water was added thereto to adjust the liquid nature to pH 7.5. Thus, a (meth)acrylic polymer (C) was obtained.

EXAMPLE 1

Seventy parts, on a solid basis, of the (meth)acrylic polymer (A) of Synthesis Example 1 was mixed with 30 parts, on a solid basis, of a polyisoprene latex (trade name "Sepolex IR-100K", manufactured by Sumitomo Seika Chemicals Co., Ltd.) as a rubber latex and 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition.

Subsequently, the water-dispersed pressure-sensitive adhesive composition prepared was applied to a poly(ethylene terephthalate) substrate (trade name "Lumirror S-10"; thickness, 25 μm; manufactured by Toray Industries, Inc.) in such an amount as to result in a dry thickness of 60 μm, and the composition applied was dried at 100°C for 3 minutes. Furthermore, the same water-dispersed pressure-sensitive adhesive composition was applied to the back surface of the poly(ethylene terephthalate) substrate and dried. Thus, a pressure-sensitive adhesive sheet was produced. A release sheet was applied to each pressure-sensitive adhesive surface to protect the pressure-sensitive adhesive surface until evaluation.

EXAMPLE 2

Seventy parts, on a solid basis, of the (meth)acrylic polymer (A) of Synthesis Example 1 was mixed with 30 parts, on a solid basis, of a polybutadiene latex (trade name "Nipol LX-111K", manufactured by Nippon Zeon Co., Ltd.) as a rubber latex and 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

EXAMPLE 3

Seventy parts, on a solid basis, of the (meth)acrylic polymer (A) of Synthesis Example 1 was mixed with 30 parts, on a solid basis, of a styrene/butadiene latex (trade name "Nipol LX-112", manufactured by Nippon Zeon Co., Ltd.) as a rubber latex and 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

EXAMPLE 4

Seventy parts, on a solid basis, of the (meth)acrylic polymer (A) of Synthesis Example 1 was mixed with 30 parts, on a solid basis, of a styrene/butadiene latex (trade name "Nipol LX-110", manufactured by Nippon Zeon Co., Ltd.) as a rubber latex and 12 parts, on a solid basis, of a terpene-phenol resin emulsion (trade name "Tamanol E-200NT"; softening point, 150°C; manufactured by Arakawa Chemical Industries, Ltd.) and 18 parts, on a solid basis, of a polymerized rosin ester terpene resin (trade name "Hariester SK-323NS"; softening point, 125°C; manufactured by Harima Chemicals, Inc.) as tackifiers to prepare a water-dispersed pressure-sensitive adhesive composition. Subsequently, a pressure-sensitive adhesive sheet was produced in the same manner as in Example 1.

EXAMPLE 5

Seventy parts, on a solid basis, of the (meth)acrylic polymer (A) of Synthesis Example 1 was mixed with 30 parts, on a solid basis, of a styrene/butadiene latex (trade name "SB Latex 2877A", manufactured by JSR Co., Ltd.) as a rubber latex and 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

EXAMPLE 6

Seventy parts, on a solid basis, of the (meth)acrylic polymer (A) of Synthesis Example 1 was mixed with 30 parts, on a solid basis, of a polyisoprene latex (trade name "Sepolex IR-100K", manufactured by Sumitomo Seika Chemicals Co., Ltd.) as a rubber latex and 21 parts, on a solid basis, of a terpene-phenol resin emulsion (trade name "Tamanol E-200NT"; softening point, 150°C; manufactured by Arakawa Chemical Industries, Ltd.) and 18 parts, on a solid basis, of an aromatic-modified terpene resin emulsion (trade name "Nanolet R1050"; softening point, 105°C; manufactured by Yasuhara Chemical Co., Ltd.) as tackifiers to prepare a water-dispersed pressure-sensitive adhesive composition. Subsequently, a pressure-sensitive adhesive sheet was produced in the same manner as in Example 1.

EXAMPLE 7

Fifty parts, on a solid basis, of the (meth)acrylic polymer (A) of Synthesis Example 1 was mixed with 50 parts, on a solid basis, of a polyisoprene latex (trade name "Sepolex IR-100K", manufactured by Sumitomo Seika Chemicals Co., Ltd.) as a rubber latex and 10 parts, on a solid basis, of a terpene-phenol resin emulsion (trade name "Tamanol E-200NT"; softening point, 150°C; manufactured by Arakawa Chemical Industries, Ltd.) and 30 parts, on a solid basis, of an aromatic-modified terpene resin emulsion (trade name "Nanolet R1050"; softening point, 105°C; manufactured by Yasuhara Chemical Co., Ltd.) as tackifiers to prepare a water-dispersed pressure-sensitive adhesive composition. Subsequently, a pressure-sensitive adhesive sheet was produced in the same manner as in Example 1.

EXAMPLE 8

Seventy parts, on a solid basis, of the (meth)acrylic polymer (A) of Synthesis Example 1 was mixed with 30 parts, on a solid basis, of a polybutadiene latex (trade name "Nipol LX-111K", manufactured by Nippon Zeon Co., Ltd.) as a rubber latex and 12 parts, on a solid basis, of a terpene-phenol resin emulsion (trade name "Tamanol E-200NT"; softening point, 150°C; manufactured by Arakawa Chemical Industries, Ltd.) and 18 parts, on a solid basis, of a petroleum resin/rosin ester mixture (trade name "LP-915"; softening point, 100°C; manufactured by Harima Chemicals, Inc.) as tackifiers to prepare a water-dispersed pressure-sensitive adhesive composition. Subsequently, a pressure-sensitive adhesive sheet was produced in the same manner as in Example 1.

EXAMPLE 9

Seventy parts, on a solid basis, of the (meth)acrylic polymer (B) of Synthesis Example 2 was mixed with 30 parts, on a solid basis, of a polyisoprene latex (trade name "Sepolex IR-100K", manufactured by Sumitomo Seika Chemicals Co., Ltd.) as a rubber latex and 12 parts, on a solid basis, of a terpene-phenol resin emulsion (trade name "Tamanol E-200NT"; softening point, 150°C; manufactured by Arakawa Chemical Industries, Ltd.) and 18 parts, on a solid basis, of an aromatic-modified terpene resin emulsion (trade name "Nanolet R1050"; softening point, 105°C; manufactured by Yasuhara Chemical Co., Ltd.) as tackifiers to prepare a water-dispersed pressure-sensitive adhesive composition. Subsequently, a pressure-sensitive adhesive sheet was produced in the same manner as in Example 1.

EXAMPLE 10

Seventy parts, on a solid basis, of the (meth)acrylic polymer (C) of Synthesis Example 3 was mixed with 30 parts, on a solid basis, of a polyisoprene latex (trade name "Sepolex IR-100K", manufactured by Sumitomo Seika Chemicals Co., Ltd.) as a rubber latex and 14 parts, on a solid basis, of a polymerized rosin ester (trade name "Super Ester KE-802"; softening point, 170°C; manufactured by Arakawa Chemical Industries, Ltd.) and 7 parts, on a solid basis, of a rosin ester (trade name "Super Ester NS-100H"; softening point, 100°C; manufactured by Arakawa Chemical Industries, Ltd.) as tackifiers to prepare a water-dispersed pressure-sensitive adhesive composition. Subsequently, a pressure-sensitive adhesive sheet was produced in the same manner as in Example 1.

EXAMPLE 11

Seventy parts, on a solid basis, of the (meth)acrylic polymer (C) of Synthesis Example 3 was mixed with 30 parts, on a solid basis, of a styrene/butadiene latex (trade name "Nipol LX-112", manufactured by Nippon Zeon Co., Ltd.) as a rubber latex and 14 parts, on a solid basis, of a polymerized rosin ester (trade name "Super Ester KE-802"; softening point, 170°C; manufactured by Arakawa Chemical Industries, Ltd.), 18 parts, on a solid basis, of an aromatic-modified terpene resin emulsion (trade name "Nanolet R1050"; softening point, 105°C; manufactured by Yasuhara Chemical Co., Ltd.), and 7 parts, on a solid basis, of a rosin ester (trade name "Super Ester NS-100H"; softening point, 100°C; manufactured by Arakawa Chemical Industries, Ltd.) as tackifiers to prepare a water-dispersed pressure-sensitive adhesive composition. Subsequently, a pressure-sensitive adhesive sheet was produced in the same manner as in Example 1.

EXAMPLE 12 (Reference)

Seventy parts, on a solid basis, of the (meth)acrylic polymer (C) of Synthesis Example 3 was mixed with 30 parts, on a solid basis, of a polyisoprene latex (trade name "Sepolex IR-100K", manufactured by Sumitomo Seika Chemicals Co., Ltd.) as a rubber latex and 18 parts, on a solid basis, of an aromatic-modified terpene resin emulsion (trade name "Nanolet R1050"; softening point, 105°C; manufactured by Yasuhara Chemical Co., Ltd.) as a tackifier to prepare a water-dispersed pressure-sensitive adhesive composition. Subsequently, a pressure-sensitive adhesive sheet was produced in the same manner as in Example 1.

EXAMPLE 13

Forty parts, on a solid basis, of the (meth)acrylic polymer (A) of Synthesis Example 1 was mixed with 60 parts, on a solid basis, of a polyisoprene latex (trade name "Sepolex IR-100K", manufactured by Sumitomo Seika Chemicals Co., Ltd.) as a rubber latex and 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

EXAMPLE 14

Twenty parts, on a solid basis, of the (meth)acrylic polymer (A) of Synthesis Example 1was mixed with 80 parts, on a solid basis, of a polyisoprene latex (trade name "Sepolex IR-100K", manufactured by Sumitomo Seika Chemicals Co., Ltd.) as a rubber latex and 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

COMPARATIVE EXAMPLE 1

The (meth)acrylic polymer (A) of Synthesis Example 1 was used as a water-dispersed pressure-sensitive adhesive composition without incorporating any rubber latex or any tackifier thereinto. Subsequently, a pressure-sensitive adhesive sheet was produced in the same manner as in Example 1.

COMPARATIVE EXAMPLE 2

A hundred parts, on a solid basis, of the (meth)acrylic polymer (A) of Synthesis Example 1 was mixed with 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

COMPARATIVE EXAMPLE 3

The (meth)acrylic polymer (B) of Synthesis Example 2 was used as a water-dispersed pressure-sensitive adhesive composition without incorporating any rubber latex or any tackifier thereinto. Subsequently, a pressure-sensitive adhesive sheet was produced in the same manner as in Example 1.

COMPARATIVE EXAMPLE 4

A hundred parts, on a solid basis, of the (meth)acrylic polymer (B) of Synthesis Example 2 was mixed with 30 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

COMPARATIVE EXAMPLE 5

Seventy parts, on a solid basis, of the (meth)acrylic polymer (A) of Synthesis Example 1 was mixed with 30 parts, on a solid basis, of a polyisoprene latex (trade name "Sepolex IR-100K", manufactured by Sumitomo Seika Chemicals Co., Ltd.) as a rubber latex to prepare a water-dispersed pressure-sensitive adhesive composition. Subsequently, a pressure-sensitive adhesive sheet was produced in the same manner as in Example 1.

COMPARATIVE EXAMPLE 6

Seventy parts, on a solid basis, of the (meth)acrylic polymer (A) of Synthesis Example 1 was mixed with 30 parts, on a solid basis, of a polybutadiene latex (trade name "Nipol LX-111K", manufactured by Nippon Zeon Co., Ltd.) as a rubber latex to prepare a water-dispersed pressure-sensitive adhesive composition. Subsequently, a pressure-sensitive adhesive sheet was produced in the same manner as in Example 1.

COMPARATIVE EXAMPLE 7

Seventy parts, on a solid basis, of the (meth)acrylic polymer (A) of Synthesis Example 1 was mixed with 30 parts, on a solid basis, of a styrene/butadiene latex (trade name "Nipol LX-112", manufactured by Nippon Zeon Co., Ltd.) as a rubber latex to prepare a water-dispersed pressure-sensitive adhesive composition. Subsequently, a pressure-sensitive adhesive sheet was produced in the same manner as in Example 1.

COMPARATIVE EXAMPLE 8

Seventy parts, on a solid basis, of the (meth)acrylic polymer (A) of Synthesis Example 1 was mixed with 30 parts, on a solid basis, of a styrene/butadiene latex (trade name "SB Latex 2877A", manufactured by JSR Co., Ltd.) as a rubber latex to prepare a water-dispersed pressure-sensitive adhesive composition. Subsequently, a pressure-sensitive adhesive sheet was produced in the same manner as in Example 1.

COMPARATIVE EXAMPLE 9

Seventy parts, on a solid basis, of the (meth)acrylic polymer (A) of Synthesis Example 1was mixed with 30 parts, on a solid basis, of an acrylonitrile/butadiene latex (trade name "Nipol LX-513", manufactured by Nippon Zeon Co., Ltd.) as a rubber latex and 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

COMPARATIVE EXAMPLE 10

A hundred parts, on a solid basis, of a polyisoprene latex (trade name "Sepolex IR-100K", manufactured by Sumitomo Seika Chemicals Co., Ltd.) was mixed as a rubber latex with 20 parts, on a solid basis, of a terpene-phenol resin emulsion (trade name "Tamanol E-200NT"; softening point, 150°C; manufactured by Arakawa Chemical Industries, Ltd.) as a tackifier to prepare a water-dispersed pressure-sensitive adhesive composition. Subsequently, a pressure-sensitive adhesive sheet was produced in the same manner as in Example 1.

<Evaluation>

Evaluation was conducted by the following methods.

(1) Measurement of Degree of Swelling (Oil Absorption)

The rubber latex used in each of the Examples and Comparative Examples was applied to a release sheet (trade name "Daiafoil MRF-38", manufactured by Mitsubishi Plastics Industries Ltd.) in such an amount as to result in a dry thickness of 160 $\mu$m, and the latex applied was dried at 100°C for 3 minutes to produce a sheet-form dried substance constituted of the rubber ingredient. Five sheets of this dried substance were stacked and then cut into a size of $20 \times 20$ mm to obtain a sample to be evaluated. The weight thereof, Wa (g), was measured.

Into an aluminum cup was introduced 1.5 g of a rust preventive oil (trade name "Preton R-303PX2; liquid kinetic viscosity at 40°C: 5.0 mm$^2$/s; manufactured by Sugimura Chemical Industrial Co., Ltd.). The sample to be evaluated was immersed in the oil. After 2-hour immersion, the excess oil was wiped off, and the weight, Wb (g), of this sample to be evaluated was measured. The degree of swelling (oil absorption) after the immersion in oil was calculated on the basis of the following equation. The results thereof are shown in Table 3.

$$\text{Degree of swelling (oil absorption) (\%)} = (\text{Wb/Wa}) \times 100$$

(2) Ascertainment of Compatibility between (Meth)acrylic Polymer and Rubber Ingredient

Seventy parts, on a solid basis, of each of the (meth)acrylic polymers (A), (B), and (C) obtained in Synthesis Examples 1 to 3 was mixed with 30 parts, on a solid basis, of each rubber latex to prepare a water-dispersed pressure-sensitive adhesive composition.

Subsequently, the water-dispersed pressure-sensitive adhesive composition prepared was applied to a release sheet (trade name "Daiafoil MRF-38", manufactured by Mitsubishi Plastics Industries Ltd.) in such an amount as to result in a dry thickness of 60 $\mu$m, and the composition applied was dried at 100°C for 3 minutes to produce a sheet for compatibility evaluation.

The sheet for evaluation was peeled from the release sheet, and the resin layer only was stacked to produce a laminate having a thickness of about 2 mm. A disk having a diameter of 7.9 mm was punched out of the laminate to obtain a test sample. The test sample was sandwiched between parallel circular plates (diameter, 7.9 mm) and examined for storage modulus (G') and loss modulus (G") using a dynamic viscoelastometer ("Advanced Rheometric Expansion System", manufactured by Rheometric Scientific Inc.) in the range of -70°C to 100°C at a heating rate of 5 °C/min while applying a shear strain with a frequency of 1 Hz. Furthermore, the loss tangent tan$\delta$ was calculated from the storage modulus (G') and loss modulus (G") using the following calculation formula.

$$\text{Loss tangent } \tan\delta = \text{G"/G'}$$

The loss tangent (tan$\delta$) calculated was plotted against temperature to thereby form a loss tangent curve, which was examined as to whether a peak assigned to the (meth)acrylic polymer and a peak assigned to the rubber ingredient were present. In the case where both peaks were absent, the two ingredients were deemed to be compatible (○); in the case where both peaks were present, the two ingredients were deemed to be incompatible (×). In addition, the loss-tangent (tan$\delta$) peak temperature was ascertained from the peak assigned to the rubber ingredient. The results of the evaluation of compatibility between the (meth)acrylic polymer and rubber ingredient used in each of the Examples and Comparative Examples given above are shown in Table 1. The loss-tangent (tan$\delta$) peak temperature of each rubber ingredient is shown in Table 3.

Graphs which show the results of the ascertainment of compatibility in the combination used in Example 10, i.e., combination of the (meth)acrylic polymer (C) and a polyisoprene latex (trade name "Sepolex IR-100K", manufactured by Sumitomo Seika Chemicals Co., Ltd.) as a rubber latex, as an example are shown in Fig. 1, and a TEM image thereof is shown in Fig. 2.

(3) Ascertainment of Compatibility between (Meth)acrylic Polymer and Tackifier

A hundred parts, on a solid basis, of each of the aqueous dispersion type (meth)acrylic polymers obtained in Synthesis Examples 1 to 3 was mixed with 20 parts, on a solid basis, of a tackifier to prepare a water-dispersed pressure-sensitive adhesive composition. Subsequently, the water-dispersed pressure-sensitive adhesive composition prepared was mixed with 0.5 parts of an acrylic thickener of the alkali viscosity increase type (trade name "Aron B-500", manufactured by Toagosei Co., Ltd.) to increase the viscosity of the composition. This water-dispersed pressure-sensitive adhesive composition having an increased viscosity was applied to a release sheet (trade name "Daiafoil MRF-38", manufactured by Mitsubishi Plastics Industries Ltd.) in such an amount as to result in a dry thickness of 60 $\mu$m, and the composition applied was dried at 100°C for 3 minutes to produce a sheet to be evalauted.

A slide glass ("Slide Glass *Siro Fuchi-migaki*", manufactured by Matsunami Glass Ind., Ltd.; thickness, 1.3 mm) was laminated to one surface of the produced sheet to be evaluated, and the release sheet was peeled off to obtain a sample to be evaluated. This sample was examined for haze using hazeometer HM-150 (manufactured by Murakami Color Research Laboratory Co., Ltd.), and the haze thereof was calculated in accordance with JIS K7136 using Haze (%) = Td/Tt×100 (Td is diffuse transmittance and Tt is total light transmittance). In the case where the haze calculated is 50% or less (0-50%), the ingredients were deemed to be compatible; in the case where the haze is higher than 50%, the ingredients were deemed to be incompatible.

The results of the evaluation of haze value in the (meth)acrylic polymer/tackifier combinations used in the Examples and Comparative Examples given above are shown in Table 2.

(4) Oily-Surface Adhesive Force

One of the release sheets of each of the pressure-sensitive adhesive sheets obtained in the Examples and Comparative Examples was peeled off, and a poly(ethylene terephthalate) substrate having a thickness of 25 $\mu$m (trade name "Lumirror S-10", manufactured by Toray Industries, Inc.) was laminated to the pressure-sensitive adhesive sheet. This laminate was cut into a size of 20×100 mm to obtain a sample to be evaluated.

The sample to be evaluated was applied to an SUS304BA plate to which a rust preventive oil (trade name Preton R-303PX2, manufactured by Sugimura Chemical Industrial Co., Ltd.) had been evenly applied in an amount of

5 g/m$^2$, and a 2-kg roller was rolled on the sample forward and backward once to press-bond the sample. Thereafter, this specimen was allowed to stand at 25°C for 30 minutes or for 2 hours and then subjected to a peeling test at a peel angle of 180° and a pulling speed of 300 mm/min to measure the adhesive force (unit: N/20 mm). Oily-surface adhesive forces of 1.0 N/20 mm or higher are acceptable after 30-minute standing, and oily-surface adhesive forces of 3.5 N/20 mm or higher are acceptable after 2-hour standing. The results thereof are shown in Table 3.

(5) Non-Oily-Surface Adhesive Force (SUS Adhesive Force)

One of the release sheets of each of the pressure-sensitive adhesive sheets obtained in the Examples and Comparative Examples was peeled off, and a poly(ethylene terephthalate) substrate having a thickness of 25 $\mu$m (trade name "Lumirror S-10", manufactured by Toray Industries, Inc.) was laminated to the pressure-sensitive adhesive sheet. This laminate was cut into a size of 20×100 mm to obtain a sample to be evaluated.

This sample to be evaluated was applied at 25°C to a clean SUS304 plate which had been cleaned by rubbing, forward and backward 10 times, with clean waste impregnated with toluene, and a 2-kg roller was rolled on the sample forward and backward once to press-bond the sample. Thereafter, this specimen was allowed to stand at 25°C for 30 minutes and subjected to a peeling test at a peel angle of 180° and a pulling speed of 300 mm/min to measure the adhesive force. Non-oily-surface adhesive forces (SUS adhesive forces) of 10.0 N/20 mm or higher are acceptable after 30-minute standing. The results thereof are shown in Table 3.

[Table 1]

| Results of compatibility evaluation | | | | | | | |
|---|---|---|---|---|---|---|---|
| | | Rubber latex | | | | | |
| | | IR-100K | LX-111K | LX112 | LX110 | 2877A | LX-513 |
| Acrylic polymer | (A) | × | × | × | × | × | × |
| | (B) | × | - | - | - | - | - |
| | (C) | × | - | × | - | - | - |
| ○: compatible ×: incompatible | | | | | | | |

[Table 2]

| Results of compatibility evaluation (haze value [%]) | | | | | | | |
|---|---|---|---|---|---|---|---|
| | | Tackifier resin | | | | | |
| | | E-200NT | KE-802 | SK-323NS | R-1050 | LP-915 | NS-100H |
| Acrylic polymer | (A) | ○ (0.5) | - | × (65.6) | × (62.4) | ○ (40.4) | - |
| | (B) | ○ (1.0) | - | - | × (65.2) | - | - |
| | (C) | - | ○ (0.7) | - | ○ (2.6) | - | ○ (0.8) |
| ○: compatible ×: incompatible | | | | | | | |

[Table 3]

| | Acrylic polymer | | | Rubber latex | | | | | | | Tackifier | | | | | | | Oily-surface adhesive force [N/20 mm] | | Non-Oily surface adhesive force [N/20 mm] |
|---|---|---|---|---|---|---|---|---|---|---|---|---|---|---|---|---|---|---|---|---|
| | | | | Kind | IR-100K | LX-111K | LX-112 | LX-110 | 2877A | LX-513 | Kind | E-200NT | KE-802 | SK-323NS | R-1050 | LP-915 | NS-100H | | | |
| | (A) | (B) | (C) | Degree of swelling [%] | 175 | 237 | 156 | 156 | 142 | 110 | Type | terpene | polymerized rosin ester | polymerized rosin ester terpene | terpene | petroleum resin/ rosin ester | rosin ester | | | |
| | | | | Tanδ peak temperature | -53°C | -70°C or less | -40°C | -40°C | -26°C | -29°C | Softening point | 150°C | 170°C | 125°C | 105°C | 100°C | 100°C | 30 min | 2 hr | 30 min |
| Ex.1 | 70 | | | Amount | 30 | | | | | | Amount | 20 | | | | | | 3.8 | 7.7 | 14.0 |
| Ex. 2 | 70 | | | | | 30 | | | | | | 20 | | | | | | 2.6 | 8.2 | 16.8 |
| Ex. 3 | 70 | | | | | | 30 | | | | | 20 | | | | | | 2.9 | 5.1 | 14.9 |
| Ex. 4 | 70 | | | | | | | 30 | | | | 12 | | 18 | | | | 3.5 | 10.4 | 10.2 |
| Ex. 5 | 70 | | | | | | | | | 30 | | 20 | | | | | | 2.0 | 5.1 | 15.6 |
| Ex. 6 | 70 | | | | 30 | | | | | | | 21 | | | 18 | | | 4.4 | 6.6 | 13.6 |
| Ex. 7 | 50 | | | | 50 | | | | | | | 10 | | | 30 | | | 7.2 | 6.0 | 10.6 |
| Ex. 8 | 70 | | | | | 30 | | | | | | 12 | | | | 18 | | 3.0 | 7.3 | 11.4 |
| Ex. 9 | | 70 | | | 30 | | | | | | | 12 | | | 18 | | | 2.5 | 4.6 | 11.1 |
| Ex. 10 | | | 70 | | 30 | | | | | | | | | 14 | | | 7 | 6.6 | 7.3 | 16.0 |
| Ex. 11 | | | 70 | | | | 30 | | | | | | | 14 | 18 | | 7 | 7.3 | 13.5 | 19.9 |
| Ex. 12 | | | 70 | | 30 | | | | | | | | | | 18 | | | 2.7 | 3.5 | 12.8 |
| Ex. 13 | 40 | | | | 60 | | | | | | | 20 | | | | | | 4.8 | 8.3 | 14.1 |
| Ex. 14 | 20 | | | | 80 | | | | | | | 20 | | | | | | 6.8 | 8.6 | 13.5 |

(continued)

| | Acrylic polymer | | | Rubber latex | | | | | | | Tackifier | | | | | | | Oily-surface adhesive force [N/20 mm] | | Non-Oily surface adhesive force [N/20 mm] |
|---|---|---|---|---|---|---|---|---|---|---|---|---|---|---|---|---|---|---|---|---|
| | | | | Kind | IR-100K | LX-111K | LX-112 | LX-110 | 2877A | LX-513 | Kind | E-200NT | KE-802 | SK-323NS | R-1050 | LP-915 | NS-100H | | | |
| | (A) | (B) | (C) | Degree of swelling [%] | 175 | 237 | 156 | 156 | 142 | 110 | Type | terpene | polymerized rosin ester | polymerized rosin ester terpene | terpene | petroleum resin/ rosin ester | rosin ester | | | |
| | | | | Tanδ peak temperature | -53°C | -70°C or less | -40°C | -40°C | -26°C | -29°C | Softening point | 150°C | 170°C | 125°C | 105°C | 100°C | 100°C | 30 min | 2 hr | 30 min |
| Comp. Ex. 1 | 100 | | | Amount | - | - | - | | - | - | Amount | - | | | - | | | 0.0 | 0.0 | 7.9 |
| Comp. Ex. 2 | 100 | | | | - | - | - | | - | - | | 20 | | | - | | | 1.0 | 1.7 | 14.3 |
| Comp. Ex. 3 | | 100 | | | - | - | - | | - | - | | - | | | - | | | 0.0 | 0.0 | 8.1 |
| Comp. Ex. 4 | | 100 | | | - | - | - | | - | - | | 30 | | | - | | | 0.6 | 6.2 | 14.3 |
| Comp. Ex. 5 | 70 | | | | 30 | - | - | | - | - | | - | | | - | | | 0.5 | 1.1 | 7.4 |
| Comp. Ex. 6 | 70 | | | | | 30 | | | | | | - | | | - | | | 0.1 | 0.3 | 7.5 |
| Comp. Ex. 7 | 70 | | | | | | 30 | | | | | - | | | - | | | 0.1 | 0.4 | 8.2 |
| Comp. Ex. 8 | 70 | | | | | | | | 30 | | | - | | | - | | | 0.1 | 0.6 | 7.8 |
| Comp. Ex. 9 | 70 | | | | | | | | | 30 | | 20 | | | - | | | 0.4 | 2.4 | 16.0 |
| Comp. Ex. 10 | | | | | 100 | | | | | | | 20 | | | | | | 3.2 | 4.0 | 9.3 |

EP 2 924 091 B1

It can be seen that the pressure-sensitive adhesive sheets according to the invention not only show adhesiveness to non-oily surfaces of metals (SUS, etc.) to which oily matter is not adherent but also show excellent adhesiveness, from the beginning, to the adherend surface to which oily matter is adherent.

Meanwhile, in the case of the Comparative Examples, in which any of an acrylic polymer, a rubber latex, and a tackifier is not contained, it can be seen that the pressure-sensitive adhesive sheets do not show sufficient adhesive force in application to the adherend surface to which oily matter is adherent or do show sufficient adhesive force to the oily surface but are insufficient in adhesive force in application to the non-oily surface.

Description of the Reference Numerals

1 Substrate
2 Pressure-sensitive adhesive layer
3 Release sheet
4 First adherend
5 Second adherend
6 Oily matter
7 Pressure-sensitive adhesive sheet
8 Substrate

**Claims**

1. A water-dispersed pressure-sensitive adhesive composition, which comprises:

a (meth)acrylic polymer obtained by polymerizing monomer ingredient(s) including as a main component a (meth)acrylic acid alkyl ester in which the alkyl group has 1-18 carbon atoms, the content of said (meth)acrylic acid alkyl ester being 60% by weight or more of all monomers of the monomer ingredients,
a rubber ingredient which is incompatible with the (meth)acrylic polymer as determined by observing whether the loss modulus curve or the loss tangent curve obtained by a dynamic viscoelasticity examination has two peaks assigned to the rubber ingredient and to the (meth)acrylic polymer, respectively, and which has a degree of swelling of 130% or higher upon immersion for 2 hours in a mineral-oil-based rust preventive oil having a kinetic viscosity at 40°C of 5 mm$^2$/s, and
a tackifier,

wherein a blending ratio by weight of the (meth)acrylic polymer to the rubber ingredient is from 95/5 to 5/95, and wherein the tackifier contains at least a tackifier having a softening point of 120°C or higher.

2. The water-dispersed pressure-sensitive adhesive composition according to claim 1, wherein an amount of the tackifier incorporated is 15-50 parts by weight per 100 parts by weight of the sum of the (meth)acrylic polymer and the rubber ingredient.

3. The water-dispersed pressure-sensitive adhesive composition according to claim 1 or 2, wherein the tackifier is a rosin-based resin.

4. The water-dispersed pressure-sensitive adhesive composition according to any one of claims 1 to 3, wherein the rubber ingredient is at least one member selected from the group consisting of natural rubber, polyisoprene rubber, polybutadiene rubber, and styrene/butadiene rubber.

5. The water-dispersed pressure-sensitive adhesive composition according to any one of claims 1 to 4, wherein the rubber ingredient, when examined for dynamic viscoelasticity at a shear strain with a frequency of 1 Hz, has a loss-tangent peak temperature of -5°C or lower.

6. The water-dispersed pressure-sensitive adhesive composition according to any one of claims 1 to 5, wherein the (meth)acrylic polymer is a polymer obtained by copolymerizing monomer ingredients including

(A) 60-99.5% by weight of the (meth)acrylic acid alkyl ester in which the alkyl group has 1-18 carbon atoms,

(B) 0.5-12% by weight of a reactive functional group-containing unsaturated monomer, and

(C) 0-39.5% by weight of an unsaturated monomer which is copolymerizable with said (A) and said (B).

**7.** The water-dispersed pressure-sensitive adhesive composition according to claim 6, wherein in the (meth)acrylic acid alkyl ester (A), a content rate of a (meth)acrylic acid alkyl ester in which the alkyl group has 7-18 carbon atoms is 10% by weight or higher.

**8.** The water-dispersed pressure-sensitive adhesive composition according to claims 6 or 7, wherein the functional group of the reactive functional group-containing unsaturated monomer (B) is at least one member selected from the group consisting of a carboxyl group and a hydroxyl group.

**9.** A pressure-sensitive adhesive layer formed from the water-dispersed pressure-sensitive adhesive composition according to any one of claims 1 to 8.

**10.** A pressure-sensitive adhesive sheet which comprises the pressure-sensitive adhesive layer according to claim 9.

**11.** A laminate in which a pressure-sensitive adhesive layer formed from a water-dispersed pressure-sensitive adhesive composition comprising: a (meth)acrylic polymer obtained by polymerizing monomer ingredient(s) including as a main component a (meth)acrylic acid alkyl ester in which the alkyl group has 1-18 carbon atoms, the content of said (meth)acrylic acid alkyl ester being 60% by weight or more of all monomers of the monomer ingredients, a rubber ingredient which is incompatible with the (meth)acrylic polymer as determined by observing whether the loss modulus curve or the loss tangent curve obtained by a dynamic viscoelasticity examination has two peaks assigned to the rubber ingredient and to the (meth)acrylic polymer, respectively, and which has a degree of swelling of 130% or higher upon immersion for 2 hours in a mineral-oil-based rust preventive oil having a kinetic viscosity at 40°C of 5 mm$^2$/s, and a tackifier, wherein a blending ratio by weight of the (meth)acrylic polymer to the rubber ingredient is from 95/5 to 5/95, or a pressure-sensitive adhesive sheet comprising said pressure-sensitive adhesive layer is applied to a surface of an adherend having an oily matter adherent to the surface thereof.

**12.** The laminate according to claim 11, wherein the adherend is a metallic steel plate having an oily matter adherent to a surface thereof.

**Patentansprüche**

**1.** Wasserdispergierte Haftklebstoffzusammensetzung, welche umfasst:

ein (Meth)acrylpolymer, das durch Polymerisieren von einem Monomerbestandteil (Monomerbestandteilen) erhalten wird, die als eine Hauptkomponente einen (Meth)acrylsäurealkylester enthalten, in dem die Alkylgruppe 1-18 Kohlenstoffatome aufweist, wobei der Gehalt des (Meth)acrylsäurealkylesters 60 Gew.-% oder mehr von allen Monomeren der Monomerbestandteile beträgt, einen Kautschukbestandteil, welcher mit dem (Meth)acrylpolymer inkompatibel ist, bestimmt durch Beobachten, ob die Verlustmodulkurve oder die Verlusttangentenkurve, die durch eine dynamische Viskoelastizitätsuntersuchung erhalten wird, zwei Peaks aufweist, die dem Kautschukbestandteil bzw. dem (Meth)acrylpolymer zugeordnet werden, und welcher einen Quellgrad von 130 % oder höher nach 2 Stunden langem Eintauchen in ein Rostschutzöl auf Mineralölbasis mit einer kinetischen Viskosität bei 40 °C von 5 mm$^2$/s aufweist, und einen Klebrigmacher,

wobei ein Mischungsverhältnis, bezogen auf das Gewicht, des (Meth)acrylpolymers zu dem Kautschukbestandteil 95/5 bis 5/95 beträgt, und wobei der Klebrigmacher wenigstens einen Klebrigmacher mit einem Erweichungspunkt von 120 °C oder höher enthält.

**2.** Wasserdispergierte Haftklebstoffzusammensetzung gemäß Anspruch 1, wobei eine Menge des eingearbeiteten Klebrigmachers 15-50 Gewichtsteile pro 100 Gewichtsteile der Summe des (Meth)acrylpolymers und des Kautschukbestandteils beträgt.

**3.** Wasserdispergierte Haftklebstoffzusammensetzung gemäß Anspruch 1 oder 2, wobei der Klebrigmacher ein Harz auf Kolophoniumbasis ist.

**4.** Wasserdispergierte Haftklebstoffzusammensetzung gemäß einem der Ansprüche 1 bis 3, wobei der Kautschukbestandteil wenigstens ein Mitglied, ausgewählt aus der Gruppe bestehend aus Naturkautschuk, Polyisoprenkautschuk, Polybutadienkautschuk und Styrol/Butadien-Kautschuk, ist.

**5.** Wasserdispergierte Haftklebstoffzusammensetzung gemäß einem der Ansprüche 1 bis 4, wobei der Kautschukbestandteil, wenn er im Hinblick auf die dynamische Viskoelastizität bei einer Scherung mit einer Frequenz von 1 Hz untersucht wird, eine Verlusttangenten-Peaktemperatur von -5 °C oder niedriger aufweist.

**6.** Wasserdispergierte Haftklebstoffzusammensetzung gemäß einem der Ansprüche 1 bis 5, wobei das (Meth)acrylpolymer ein Polymer ist, das durch Copolymerisieren von Monomerbestandteilen erhalten wird, die umfassen:

(A) 60-99,5 Gew.-% des (Meth)acrylsäurealkylesters, in dem die Alkylgruppe 1-18 Kohlenstoffatome aufweist,
(B) 0,5-12 Gew.-% eines eine reaktive funktionelle Gruppe enthaltenden ungesättigten Monomers, und
(C) 0-39,5 Gew.-% eines ungesättigten Monomers, welches mit dem (A) und dem (B) copolymerisierbar ist.

**7.** Wasserdispergierte Haftklebstoffzusammensetzung gemäß Anspruch 6, wobei in dem (Meth)acrylsäurealkylester (A) ein Gehaltsanteil eines (Meth)acrylsäurealkylesters, in dem die Alkylgruppe 7-18 Kohlenstoffatome aufweist, 10 Gew.-% oder höher ist.

**8.** Wasserdispergierte Haftklebstoffzusammensetzung gemäß den Ansprüchen 6 oder 7, wobei die funktionelle Gruppe des eine reaktive funktionelle Gruppe enthaltenden ungesättigten Monomers (B) wenigstens ein Mitglied, ausgewählt aus der Gruppe bestehend aus einer Carboxylgruppe und einer Hydroxylgruppe, ist.

**9.** Haftklebstoffschicht, die aus der wasserdispergierten Haftklebstoffzusammensetzung gemäß einem der Ansprüche 1 bis 8 gebildet ist.

**10.** Haftklebefolie, welche die Haftklebstoffschicht gemäß Anspruch 9 umfasst.

**11.** Laminat, in dem eine Haftklebstoffschicht, die aus einer wasserdispergierten Haftklebstoffzusammensetzung gebildet ist, welche umfasst: ein (Meth)acrylpolymer, das durch Polymerisieren von einem Monomerbestandteil (Monomerbestandteilen) erhalten wird, die als eine Hauptkomponente einen (Meth)acrylsäurealkylester enthalten, in dem die Alkylgruppe 1-18 Kohlenstoffatome aufweist, wobei der Gehalt des (Meth)acrylsäurealkylesters 60 Gew.-% oder mehr von allen Monomeren der Monomerbestandteile beträgt, einen Kautschukbestandteil, welcher mit dem (Meth)acrylpolymer inkompatibel ist, bestimmt durch Beobachten, ob die Verlustmodulkurve oder die Verlusttangentenkurve, die durch eine dynamische Viskoelastizitätsuntersuchung erhalten wird, zwei Peaks aufweist, die dem Kautschukbestandteil bzw. dem (Meth)acrylpolymer zugeordnet werden, und welcher einen Quellgrad von 130 % oder höher nach 2 Stunden langem Eintauchen in ein Rostschutzöl auf Mineralölbasis mit einer kinetischen Viskosität bei 40 °C von 5 mm$^2$/s aufweist, und einen Klebrigmacher, wobei ein Mischungsverhältnis, bezogen auf das Gewicht, des (Meth)acrylpolymers zu dem Kautschukbestandteil 95/5 bis 5/95 beträgt, oder eine Haftklebefolie, die die Haftklebstoffschicht umfasst, auf eine Oberfläche eines Adhärenden aufgebracht ist, der eine an der Oberfläche davon anhaftende ölige Substanz aufweist.

**12.** Laminat gemäß Anspruch 11, wobei der Adhärend eine metallische Stahlplatte ist, die eine an einer Oberfläche davon anhaftende ölige Substanz aufweist.

**Revendications**

**1.** Composition d'adhésif sensible à la pression en dispersion aqueuse, qui comprend :

un polymère (méth)acrylique obtenu en polymérisant un ou des ingrédients monomères y compris en tant que composant principal un ester alkylique d'acide (méth)acrylique dans lequel le groupe alkyle a de 1 à 18 atomes de carbone, la teneur dudit ester alkylique d'acide (méth)acrylique étant de 60 % en poids ou plus de tous les monomères des ingrédients monomères,
un ingrédient caoutchouc qui est incompatible avec le polymère (méth)acrylique ainsi que déterminé en observant si la courbe du module de perte ou la courbe de la tangente de l'angle perte obtenue par un examen de la viscoélasticité dynamique présente deux pics attribués respectivement à l'ingrédient caoutchouc et au polymère (méth)acrylique et qui a un degré de gonflement de 130 % ou plus lors d'une immersion pendant 2 heures

EP 2 924 091 B1

dans une huile antirouille à base d'huile minérale ayant une viscosité cinétique à 40 °C de 5 mm$^2$/s, et un agent apportant du collant,
un rapport de mélange en poids du polymère (méth)acrylique à l'ingrédient caoutchouc allant de 95/5 à 5/95, et

l'agent apportant du collant contenant au moins un agent apportant du collant ayant un point de ramollissement de 120 °C ou plus.

2. Composition d'adhésif sensible à la pression en dispersion aqueuse selon la revendication 1, dans laquelle une quantité de l'agent apportant du collant incorporé est de 15 à 50 parties en poids pour 100 parties en poids de la somme du polymère (méth)acrylique et de l'ingrédient caoutchouc.

3. Composition d'adhésif sensible à la pression en dispersion aqueuse selon la revendication 1 ou 2, dans laquelle l'agent apportant du collant est une résine à base de colophane.

4. Composition d'adhésif sensible à la pression en dispersion aqueuse selon l'une quelconque des revendications 1 à 3, dans laquelle l'ingrédient caoutchouc est au moins un élément choisi dans le groupe constitué de caoutchouc naturel, caoutchouc de polyisoprène, caoutchouc de polybutadiène et caoutchouc de styrène/butadiène.

5. Composition d'adhésif sensible à la pression en dispersion aqueuse selon l'une quelconque des revendications 1 à 4, dans laquelle l'ingrédient caoutchouc, quand on l'examine du point de vue de la viscoélasticité dynamique sous une contrainte de cisaillement avec une fréquence de 1 Hz, présente une température maximale de tangente d'angle de perte de -5 °C ou moins.

6. Composition d'adhésif sensible à la pression en dispersion aqueuse selon l'une quelconque des revendications 1 à 5, dans laquelle le polymère (méth)acrylique est un polymère obtenu en copolymérisant des ingrédients monomères incluant

(A) 60 à 99,5 % en poids de l'ester alkylique d'acide (méth)acrylique dans lequel le groupe alkyle a de 1 à 18 atomes de carbone,
(B) 0,5 à 12 % en poids d'un monomère insaturé contenant un groupe fonctionnel réactif, et
(C) 0 à 39,5 % en poids d'un monomère insaturé qui est copolymérisable avec lesdits (A) et (B).

7. Composition d'adhésif sensible à la pression en dispersion aqueuse selon la revendication 6, où dans l'ester alkylique d'acide (méth)acrylique (A), une teneur d'un ester alkylique d'acide (méth)acrylique dans lequel le groupe alkyle a de 7 à 18 atomes de carbone est de 10 % en poids ou plus.

8. Composition d'adhésif sensible à la pression en dispersion aqueuse selon les revendications 6 ou 7, dans laquelle le groupe fonctionnel du monomère insaturé (B) contenant un groupe fonctionnel réactif est au moins un élément choisi dans le groupe constitué d'un groupe carboxyle et d'un groupe hydroxyle.

9. Couche d'adhésif sensible à la pression formée à partir de la composition d'adhésif sensible à la pression en dispersion aqueuse selon l'une quelconque des revendications 1 à 8.

10. Feuille d'adhésif sensible à la pression qui comprend la couche d'adhésif sensible à la pression selon la revendication 9.

11. Stratifié dans lequel une couche d'adhésif sensible à la pression formée à partir d'une composition d'adhésif sensible à la pression en dispersion aqueuse comprenant : un polymère (méth)acrylique obtenu en en polymérisant un ou des ingrédients monomères y compris en tant que composant principal un ester alkylique d'acide (méth)acrylique dans lequel le groupe alkyle a de 1 à 18 atomes de carbone, la teneur dudit ester alkylique d'acide (méth)acrylique étant de 60 % en poids ou plus de tous les monomères des ingrédients monomères, un ingrédient caoutchouc qui est incompatible avec le polymère (méth)acrylique ainsi que déterminé en observant si la courbe du module de perte ou la courbe de la tangente de l'anglet de perte obtenue par un examen de la viscoélasticité dynamique présente respectivement deux pics attribués à l'ingrédient caoutchouc et au polymère (méth)acrylique et qui a un degré de gonflement de 130 % ou plus lors d'une immersion pendant 2 heures dans une huile antirouille à base d'huile minérale ayant une viscosité cinétique à 40 °C de 5 mm$^2$/s, et un agent apportant du collant, un rapport de mélange en poids du polymère (méth)acrylique à l'ingrédient caoutchouc allant de 95/5 à 5/95, ou une feuille d'adhésif sensible à la pression comprenant ladite couche d'adhésif sensible à la pression est appliquée sur la

28

surface d'un support à la surface duquel adhère une matière huileuse.

12. Stratifié selon la revendication 11, dans lequel le support est une tôle métallique en acier à la surface de laquelle adhère une matière huileuse.

[FIG. 1]

[FIG. 2]

Acrylic Phase

2 μm

Rubber Phase

[FIG. 3]

(a)

(b)

(c)

(d)

[FIG. 4]

(a)

(b)

(c)

(d)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3615774 B
- JP 3968836 B
- JP 2007197629 A

- JP 2009001673 A
- JP 2007063536 A

**Non-patent literature cited in the description**

- **TAKUMI OKAZAKI.** *Setchaku No Gijutsu,* 2000, vol. 20 (2), 13

- Polymer Handbook. John Wiley & Sons, Inc, 1989